# FASCICULE DE BREVET EUROPEEN

(11) **EP 2 145 447 B1**
(45) Date de publication et mention de la délivrance du brevet: **28.02.2018**
(21) Numéro de dépôt: 08735758.8
(22) Date de dépôt: 03.04.2008
(51) Int. Cl.: H04L 29/06

(54) **ARCHITECTURE D'UN RESEAU LOCAL OUVERT SUPPORT DE SERVICES AUDIO ENTRE USAGERS APPARTENANT A DES DOMAINES CLOISONNES**
ARCHITEKTUR EINES OFFENEN LOKALEN NETZWERKS FÜR AUDIODIENSTUNTERSTÜTZUNG ZWISCHEN BENUTZERN PARTITIONIERTER DOMÄNEN
ARCHITECTURE OF AN OPEN LOCAL AREA NETWORK FOR AUDIO SERVICE SUPPORT BETWEEN USERS OF PARTITIONED DOMAINS

(30) Priorité: 03.04.2007 FR 0702438; 11.05.2007 FR 0703383
(43) Date de publication de la demande: 20.01.2010
(73) Titulaire: THALES, 92400 Courbevoie (FR)
(72) Inventeur: MAIRE, Françoise, F-92700 Colombes (FR); RENAUX, Michel, F-92700 Colombes (FR); BASKARADASSE, Frédérika, F-92700 Colombes (FR); OUSTRIC, Michel, F-92700 Colombes (FR)
(74) Mandataire: Dudouit, Isabelle
(86) Numéro de dépôt international: PCT/EP2008/054012
(87) Numéro de publication internationale: WO 2008/125510

(56) Documents cités:
- EP-A- 0 849 680
- EP-A- 1 318 645
- WO-A-2005/083970
- FR-A- 2 890 510
- US-A1- 2006 218 399

## Description

L'invention concerne une architecture dans un réseau local. Il concerne, notamment, le domaine de celui des réseaux locaux en Voix sur IP (VoIP) multi-services ouvert (avec accès à des abonnés externes) de communication audio dans un environnement qui exige des contraintes de sécurité. Les données échangées peuvent avoir un format audio ou multimédia.
Par réseau local ouvert, on sous-entend un réseau local permettant l'accès à des abonnés extérieurs.

Une première solution décrite dans l'art antérieur consiste à mettre à disposition dans chaque poste de travail d'un utilisateur, un terminal phonie par domaine. Cette solution présente toutefois quelques inconvénients listés ci-après :
∘ une absence de convivialité du poste de travail,
∘ un risque d'erreur d'exploitation par l'usager conduisant à une faille dans la sécurité,
∘ pour chaque usager, elle nécessite un poste par niveau de sécurité,
∘ l'absence d'assurance que les flux transitent bien sur le bon niveau de sécurité.
Le brevet européen EP0690604 "Procédé pour assurer la confidentialité d'une liaison phonique et réseau local de télécommunication mettant en oeuvre le procédé" décrit une seconde solution adaptée à des réseaux numériques à intégration de service locaux.
Par ailleurs, la technologie Voix sur IP (VoIP) permet de réaliser des réseaux locaux ouverts à partir de constituants commerciaux sur étagère (COTS: Commercial of the shelf). Cependant ces équipements employés tels quels ne permettent pas de traiter des niveaux de sécurité.
Les systèmes utilisant la technologie de voix sur IP (VoIP) de l'art antérieur connus du Demandeur ne prennent pas en compte :
∘ le contrôle d'accès à des moyens de diffusion, ce qui signifie qu'il n'est pas possible de diffuser dans un niveau de sécurité de niveau inférieur à celui de la source ; et il n'est pas possible aux terminaux audio de niveau inférieur (N2) d'accéder au service diffusion,
∘ le contrôle d'accès à des abonnés de type téléphonique (interne ou externe),
∘ l'externalisation des solutions de sécurité due à l'utilisation de produits COTS.
Les abréviations RNIS correspondent au réseau numérique à intégration de services et ISN à numéro de séquence initial (Initial Sequence Number).
La demande de brevet WO 2005/083970 décrit un procédé permettant de sécuriser la communication entre plusieurs domaines utilisateurs, en utilisant des séparateurs. Pour un paquet entant dans le réseau, le système va marquer le paquet avec un marquage relatif à un niveau de sécurité requis.
La demande de brevet EP 0849680 concerne la sécurité au niveau des systèmes comprenant plusieurs ports. Au niveau d'un paquet de données, on insère une étiquette relative à une sécurité.
Dans le cadre de l'invention, et afin de répondre à des besoins opérationnels, des échanges audio entre des usagers raccordés à un réseau Internet IP d'un premier niveau de sécurité N1 et des usagers raccordés à un réseau IP d'un second niveau de sécurité N2 (par exemple : diffusion, réseau téléphone interne ou externe), avec N1 correspondant à un niveau de sécurité supérieur au niveau N2, sont réalisés au moyen de dispositifs qui vont être décrits ci-dessous.
Des échanges audio avec l'extérieur sont réalisés via des médias radio (chaîne radio) ; ces médias radio peuvent être chiffrés ("chaîne radio chiffre") ou non chiffrés ("chaîne radio clair"). Dans un tel contexte, les flux audio "non sensibles" (de niveau de sécurité N2) peuvent circuler sur le réseau de niveau N1 et peuvent transiter entre les réseaux de niveau N2 et de niveau N1. Par contre, les flux audio "sensibles" (de niveau N1) ne peuvent ni circuler sur le réseau de niveau N2, ni transiter du réseau de niveau N1 vers le réseau de niveau N2. Les flux audio "non sensibles" (de niveau N2) peuvent être échangés avec l'extérieur sur des "chaînes radio chiffrée" ou des "chaînes radio claire". Par contre, les flux audio "sensibles" (de niveau N1) ne peuvent sortir vers l'extérieur que par l'intermédiaire d'une "chaîne radio chiffrée". Des mécanismes de sécurisation sont définis pour garantir que les flux audio de niveau N1 ne sortent du réseau N1 vers l'extérieur que sur une "chaîne radio chiffrée" et, que ces flux ne sortent ni vers le réseau N2 ni vers des équipements de niveau N2. Dans cette solution, un même terminal supporte, simultanément, les communications de domaine de sécurité différent ; pour ce faire, les terminaux sont connectés sur le réseau qui supporte le niveau de sécurité supérieur.

Cette solution présente les avantages suivants :
∘ il est possible d'utiliser la technologie Internet IP et des produits logiciels ou matériels sur étagères COTS, ce permet une grande évolutivité des services ;
∘ l'utilisation d'un enregistreur par domaine garantit une grande sécurité.
Le système et le procédé selon l'invention reposent notamment sur une nouvelle approche permettant : la diffusion d'informations entre deux réseaux de niveau qui présentent des niveaux de sécurité différents, l'ajout de ressources nécessaires à la réalisation du service diffusion IP sur niveau inférieur, l'ajout de portillons de contrôle d'accès entre le domaine de niveau de sécurité haut et le domaine de niveau de sécurité bas, la conception de l'architecture dans un contexte d'utilisation de produits COTS.
L'invention concerne un système permettant des échanges de données, entre au moins deux domaines de niveau de sécurité N1 et de niveau de sécurité N2, le premier domaine ayant un niveau de sécurité N1 supérieur au niveau de sécurité N2 du deuxième domaine, le premier domaine de sécurité de niveau N1 comprenant un réseau N1 transportant des flux audio utilisant au moins les protocoles Internet IP et VoIP, caractérisé en ce qu'il comporte au moins les éléments suivants :
∘ des moyens ISI, permettant d'insérer un marquant N1 ou N2 dans des flux audio en fonction de leur niveau de sécurité, lesdits moyens étant positionnés dans des terminaux AUT raccordés au réseau N1 du domaine de niveau de sécurité N1,
∘ des moyens FISI N1 et FISI N2, permettant de filtrer des flux audio, ledit ou lesdits moyens FISI N1 étant positionnés dans au moins une passerelle filtrante, et ledit ou lesdits moyens FISI N2 étant positionnés dans au moins une autre passerelle filtrante, lesdites passerelles étant raccordées au réseau N1 du domaine de niveau de sécurité N1, lesdites passerelles étant adaptées à réaliser une rupture de protocole, et une procédure de filtrage, selon le cas, FISI N1 ou FISI N2, des flux audio, consistant à détecter la présence d'un marquant N1 ou N2 dans le flux audio issu du réseau N1, et à contrôler le transit dudit flux audio en relation avec la cohérence entre le marquant détecté et le marquant configuré dans ladite passerelle.
Un flux audio est, par exemple, un canal particulier d'une session de communication multimédia.
Au moins une des passerelles filtrantes peut être du type RNIS-GTW-N2, connectée à un IP-BX, ladite passerelle filtrante RNIS-A-GTW-N2 étant adaptée à traduire en protocole RNIS, les flux audio VoIP issus du réseau de niveau N1 , les flux échangés entre ladite passerelle filtrante RNIS-A-GTW-N2 et ledit IP-BX étant des flux RNIS.
Ledit IP-BX ou au moins un desdits IP-BX est, par exemple, connecté à un réseau N2 de niveau de sécurité N2.
Le système peut comporter un dispositif radio professionnel comprenant plusieurs radios mobiles reliées au réseau N2 de niveau de sécurité N2 via une passerelle RNIS, P_RNIS et le dispositif IP-BX.
Le système selon l'invention comprend, par exemple, un dispositif radio professionnel comprenant plusieurs postes radio, les postes radio étant en liaison avec des terminaux AUT via une passerelle analogique du dispositif et une passerelle filtrante analogique.
Ledit IP-BX ou au moins un desdits IP-BX est connecté à une passerelle RNIS, P_RNIS, elle-même en relation avec des postes MUT d'un sous-système PMR, lesdits postes MUT étant eux-mêmes en relation avec une passerelle analogique ANALOG, elle-même interconnectée avec une des passerelles filtrantes A-GTW-N2 raccordé au réseau N1.

Un équipement de type analogique du domaine de niveau de sécurité N2 est, par exemple, en liaison avec le réseau N1 de niveau de sécurité N1 grâce à une des dites passerelles filtrantes analogiques munie dudit moyen FISI-N2, ladite passerelle filtrante analogique étant de type A-GTW-N2, adaptée à effectuer la rupture de protocole nécessaire entre l'analogique et le protocole IP, la rupture de protocole consistant à transformer en signal audio BF les flux audio reçus du réseau N1, qui sont munis dudit marquant N2, à destination desdits équipements audio et à transformer en flux audio encodé en VoIP les signaux audio BF reçus dudit équipement de type analogique ayant pour destination un équipement ou un terminal AUT raccordé au réseau N1.
Un équipement de type analogique du domaine de niveau de sécurité N1 est, par exemple, en liaison avec le réseau N1 de niveau de sécurité N1 grâce à une des dites passerelles filtrantes analogiques munie dudit moyen FISI-N1, ladite passerelle filtrante analogique étant de type A-GTW-N1, adaptée à effectuer la rupture de protocole nécessaire entre l'analogique et le protocole IP, la rupture de protocole consistant à transformer en signal audio BF les flux audio reçus du réseau N1, qui sont munis dudit marquant N1, à destination desdits équipements audio et à transformer en flux audio encodé en VoIP les signaux audio BF reçus dudit équipement de type analogique ayant pour destination un équipement ou un terminal AUT raccordé au réseau N1.
Au moins un desdits moyens ISI positionnés dans un terminal AUT peut être adapté à commander un affichage, par exemple au moyen de Leds raccordées directement, afin de confirmer l'insertion d'un marquant N1 ou N2 dans le flux audio généré vers le réseau N1.
Au moins un desdits moyens ISI positionnés dans un terminal AUT est, par exemple, adapté à insérer ledit marquant selon une période choisie afin de garantir une répartition du marquant sous-multiple de la période d'émission du paquet audio.
Lesdits marquants N1 ou N2 diffèrent, par exemple, l'un de l'autre d'au moins un bit au minimum, lors de toute comparaison après toutes rotations circulaires d'un des marquants par rapport à l'autre.

Lesdits marquants N1 ou N2 peuvent différer l'un de l'autre d'au moins un bit, sur toute portion d'une longueur donnée, au minimum lors de toute comparaison après toutes rotations circulaires d'un des marquants par rapport à l'autre, ladite longueur donnée étant en relation avec un seuil de détection, soit de blocage, soit d'autorisation de transit, dudit flux audio, dans au moins un desdits moyen FISI-N1 ou FISI-N2 correspondant.

Au moins un desdits moyens FISI positionnés dans une des dites passerelles filtrantes est, par exemple, adapté à émettre dans la voie retour dudit flux audio une tonalité d'alerte de non-détection du marquant configuré, lorsque ledit marquant n'a pas été détecté après un délai en relation avec la détection d'un signal PTT transporté dans l'encodage VoIP dudit flux audio.
Le signal PTT peut être transporté soit dans au moins un bit M encodé dans le protocole RTP dudit flux audio, soit dans la signalisation RTCP encodé dans le protocole RTP dudit flux audio, soit dans la bande audio des charges encodé dans le protocole RTP.
Le système peut comprendre un dispositif de filtrage adapté à accepter une perte de paquet sans perte de détection de marquage et donc de blocage du flux audio.
L'encodage d'au moins un desdits flux audio est, par exemple, effectué en utilisant le format G711 loi A ou loi mu.

D'autres caractéristiques et avantages de la présente invention apparaîtront mieux à la lecture de la description qui suit d'un exemple de mise en oeuvre donné à titre illustratif et nullement limitatif, annexé des figures qui représentent :
- La figure 1 un exemple d'architecture d'un système selon l'invention, comprenant deux réseaux de communication IP, ayant des niveaux de sécurité différents,
- Les figures 2A, 2B et 2C des exemples de marquants insérés dans les flux audio des informations.

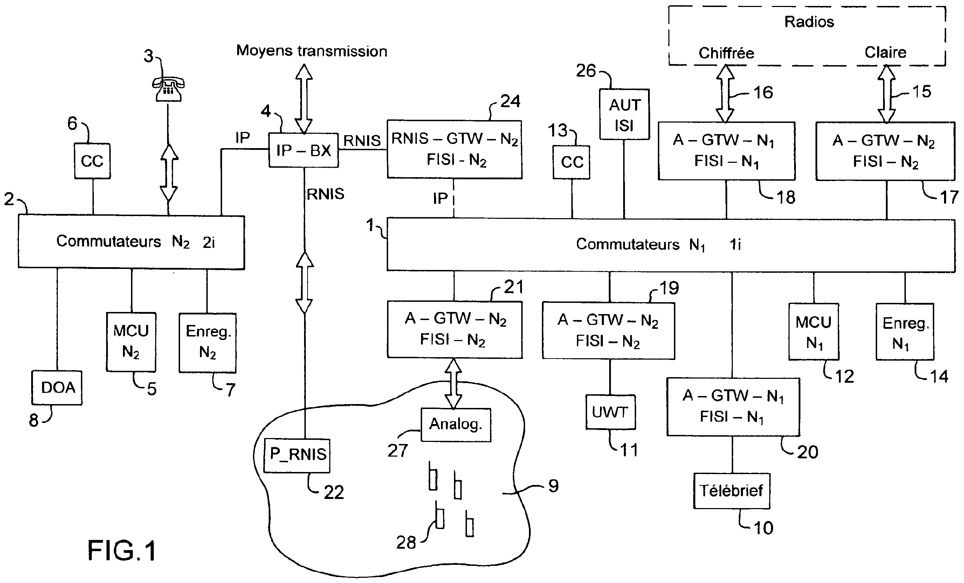

Afin de mieux faire comprendre l'objet de l'invention, l'exemple est donné dans le cas de deux réseaux fonctionnant avec le protocole Internet IP (Internet Protocol), un premier réseau ayant un niveau de sécurité N1 et un deuxième niveau de sécurité N2, avec le niveau de sécurité N1 supérieur au niveau de sécurité de N2, ce qui signifie que les données ne peuvent circuler sans contrôle du réseau N1 vers le réseau N2.
Bien entendu, l'homme de métier étendra l'enseignement technique de l'invention à des configurations système similaires, en particulier avec deux ou plusieurs niveaux de sécurité, avec l'absence d'un ou plusieurs des sous-systèmes listés et / ou l'absence de une ou plusieurs des liaisons entre sous-systèmes listées, et / ou au contraire avec la présence d'un ou plusieurs sous-systèmes non listés et / ou la présence d'une ou plusieurs liaisons non listées entre sous-systèmes.
Par exemple, l'invention s'applique aussi dans le cas de domaine de niveaux de sécurité différents. Ainsi, l'invention s'applique pour un système permettant des échanges de données, entre au moins deux domaines de niveau de sécurité N1 et de niveau de sécurité N2, le premier domaine ayant un niveau de sécurité N1 supérieur au niveau de sécurité N2 du deuxième domaine, le premier domaine de sécurité de niveau N1 comprenant un réseau N1 transportant des flux audio utilisant au moins les protocoles Internet IP et VoIP.
Dans l'exemple de la figure 1, pour des raisons de simplification d'explication, le Demandeur mentionne uniquement les réseaux qui peuvent faire partie de domaine.
La Figure 1 décrit un exemple de système dans lequel, deux réseaux de communication IP échangent des données. Le premier réseau, dénommé réseau N1, possède un niveau de sécurité N1 et le deuxième réseau dénommé réseau N2, un niveau de sécurité N2. Chaque réseau possède des commutateurs désignés respectivement 1i et 2i, auxquels se raccordent des terminaux d'usagers et des équipements de services audio. Ces commutateurs peuvent être des équipements COTS par exemple de type commutateurs Ethernet de niveau 2 ou 3.
Les éléments de la figure correspondent à :
∘ Contrôleur d'appel : CC, 6, 13,
∘ Diffuseur d'Ordre et Alerte : DOA, 8,
∘ Enregistreur du réseau N1 de niveau N1 : Enreg. N1, 14,
∘ Enregistreur du réseau N2 de niveau N2 : Enreg. N2, 7,
∘ Passerelle filtrante RNIS entre le réseau N1 et le réseau N2 : RNIS-GTW-N2, 24,
∘ Passerelle filtrante analogique avec filtre FISI-N2 : A-GTW-N2, 19, 21,
∘ Passerelle filtrante analogique avec filtre FISI-N1 : A-GTW-N1, 18, 20,
∘ Conférenceur du réseau N1 : MCU N1,12,
∘ Conférenceur du réseau N2 : MCU N2, 5,
∘ Sous-système Professional Radio Mobile : PMR, 9,
∘ Sous-système raccordement hélicoptère : Télébrief, 10,
∘ Téléphone sous-marin : UWT, 11,
Sur le réseau de niveau N2, les usagers ont accès, par exemple, aux services audio par des terminaux IP-Phone 3 (terminaux téléphonique IP) et des postes radio Multi-Utilisateurs (MUT pour MultiUser talk) 28 appartenant au système de radio professionnel mobile PMR (Professional Mobile Radio) 9.

Sur le réseau N1 de niveau N1, les usagers ont accès aux services audio par des terminaux d'interphonie IP (AUT) 26, qui sont abonnés internes IP raccordés directement à l'un ou plusieurs des commutateurs N1 1i.
Sur le réseau N2, 2, de niveau N2, les équipements raccordés sont, par exemple :
∘ Les terminaux IP-Phones 3,
∘ Un dispositif IP-BX, 4, ayant notamment pour fonction d'assurer la commutation des appels et leurs autorisations,
∘ Un équipement conférenceur (MCU-N2) 5, dédié à la diffusion d'ordre et alerte,
∘ Un dispositif de contrôle d'appels, ou « Call Controller » (CC) 6, (procédé qui est habituellement utilisé dans les réseaux en technologie VoIP pour contrôler et maintenir les connexions une fois qu'elles ont été établies),
∘ Un enregistreur-N2 (Enreg. N2) 7,
∘ un diffuseur d'ordre et alerte (DOA) 8,
∘ Le système de radio PMR 9, via l'IP-BX.
Sur le réseau N1, 1, de niveau N1, les équipements raccordés sont :
∘ Les terminaux d'interphonie (AUT) 26, qui sont, par exemple, des abonnés internes IP raccordés directement. Les terminaux AUT ont notamment pour fonction d'insérer un marqueur dans les flux audio générés, le marqueur étant en relation avec le niveau de sécurité,
∘ Le sous-système télébrief 10 est un abonné externe raccordé à une passerelle filtrante analogique A-GTW-N1 20 adaptée à filtrer les flux audio selon la fonction FISI N1.
∘ Le sous-système UWT 11 est un abonné externe raccordé à une passerelle filtrante analogique A-GTW-N2 19 adaptée à filtrer les flux audio selon la fonction FISI N2.
∘ Un équipement conférenceur (MCU-N1) 12,
∘ Un dispositif de contrôle d'appels ou Call Controller (CC) 13,
∘ Un enregistreur-N1, 14,
∘ Une ou plusieurs passerelles filtrantes analogiques A-GTW-N1 18 permettant les communications entre les terminaux d'interphonie AUT 26 et des équipements radio analogiques : chaînes radio chiffrées 16,
∘ Une ou plusieurs passerelles filtrantes analogiques A-GTW-N2, 17, permettant les communications entre les terminaux d'interphonie AUT 26 et des équipements radio analogiques : chaînes radio claires, 15.
Le système PMR (Professional Mobile Radio) est constitué, par exemple, d'une passerelle analogique ANALOG, 27, raccordée au réseau N1 via une passerelle filtrante analogique A-GTW-N2 21, la partie ANALOG 27, faisant partie du système PMR, et d'une "passerelle" P_RNIS 22, raccordée au réseau N2 via l'IP-BX 4. Les équipements de ce système sont considérés comme étant de niveau de sécurité N2. Les postes radio MUT 28i, peuvent échanger des flux non sensibles entre eux, avec les terminaux d'interphonie AUT 26, avec les IP-phones 3, et avec le diffuseur d'ordre (DOA) 8. Les chemins empruntés par les communications avec un poste du système PMR sont décrits plus loin dans la description.

Un exemple de matrice des flux échangés entre les différents terminaux et équipements, avec leurs niveaux de sensibilité, est donné dans le tableau ci-après.

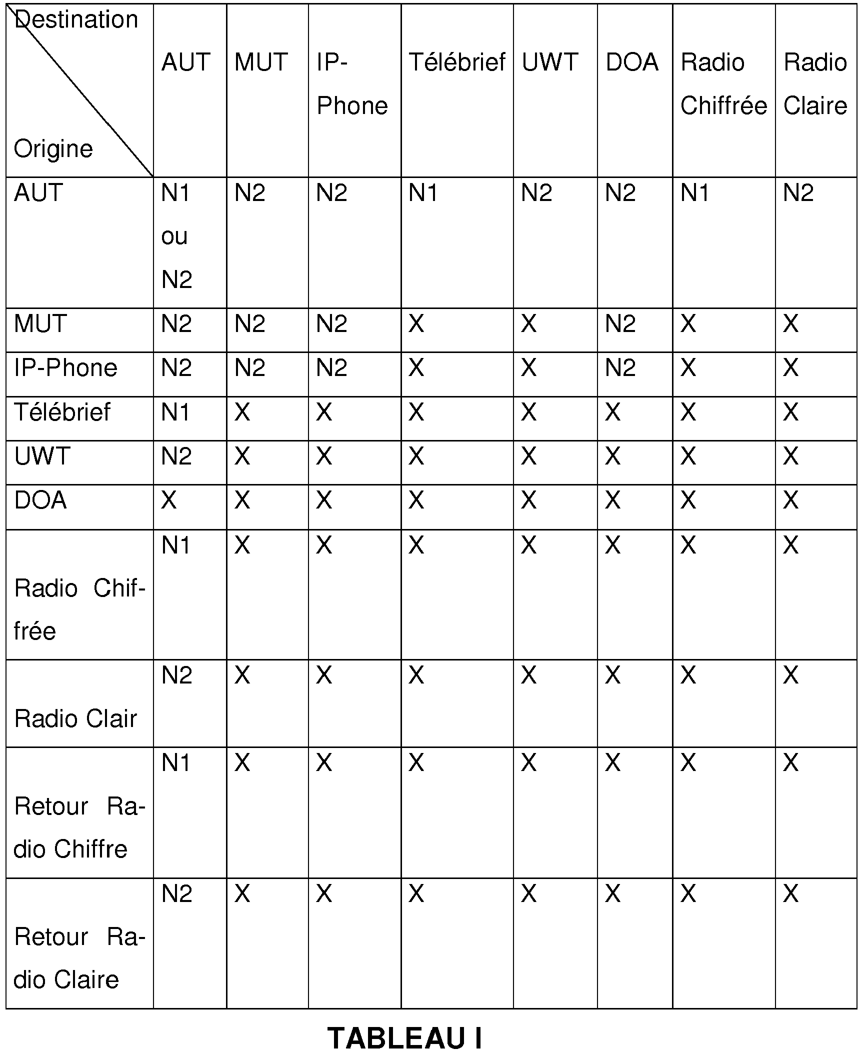

Le système et le procédé selon l'invention reposent notamment sur l'utilisation systématique, conjointe :
∘ D'une rupture de protocole,
∘ D'un mécanisme de marquage et de filtrage des flux audio.
Les passerelles filtrantes analogiques (A-GTW-N1, A-GTW-N2) 17, 18, 19, 21 mettent en oeuvre une rupture de protocole IP/analogique et une procédure de filtrage des flux (FISI).
La passerelle filtrante RNIS RNIS-GTW-N2, 24, effectue une rupture de protocole IP/ISDN et une procédure de filtrage des flux (FISI).
Un mécanisme de marquage des flux (ISI) est implémenté dans les terminaux AUT qui accèdent simultanément à des services de niveaux N1 et N2.

### Ruptures de protocole

### Principe

La rupture de protocole consiste à transmettre les informations de signalisation et les informations usagers reçues sur un port de l'équipement dans un protocole, sur un autre port de l'équipement, dans un autre protocole.

Ces ruptures de protocoles permettent en particulier d'éliminer les "canaux cachés" liés à la signalisation, sans altérer l'information usager.

### Application au cloisonnement de réseaux

Les ruptures de protocoles mises en oeuvre par le dispositif IP-BX, 4, et par la passerelle filtrante RNIS RNIS-GTW-N2, 24, consistent, par exemple, pour la passerelle filtrante RNIS RNIS-GTW-N2, 24, à traduire en protocole RNIS, les flux audio encodé en VoIP reçus des commutateurs du réseau N1,1, de niveau N1, et pour l'IP-BX, 4, à traduire les flux issus des commutateurs du réseau de niveau N2 en protocole RNIS. Les flux audio échangés entre la passerelle filtrante RNIS RNIS-GTW-N2, 24, et l'IP-BX, 4, sont des flux encodés selon le protocole RNIS bien connu de l'homme de l'art.

Les ruptures de protocoles mises en oeuvre par les passerelles filtrantes analogiques de type A-GTW (A-GTW-N1 ou A-GTW-N2) 17, 18, 19, 21 consistent à transformer en signal audio basse fréquence (BF) les flux IP reçus des commutateurs 1i du réseau N1 à destination des équipements audio reliés au réseau concerné et à transformer en flux IP les signaux audio (BF) reçus des équipements audio ayant pour destination le réseau IP.

Si l'on utilise des variantes des protocoles RNIS et IP, par exemple Ipv6, les mécanismes de rupture de protocole et de filtre sont toujours utilisés sans sortir du cadre de l'invention.

### Fonctions marquage et filtrage

### Principe

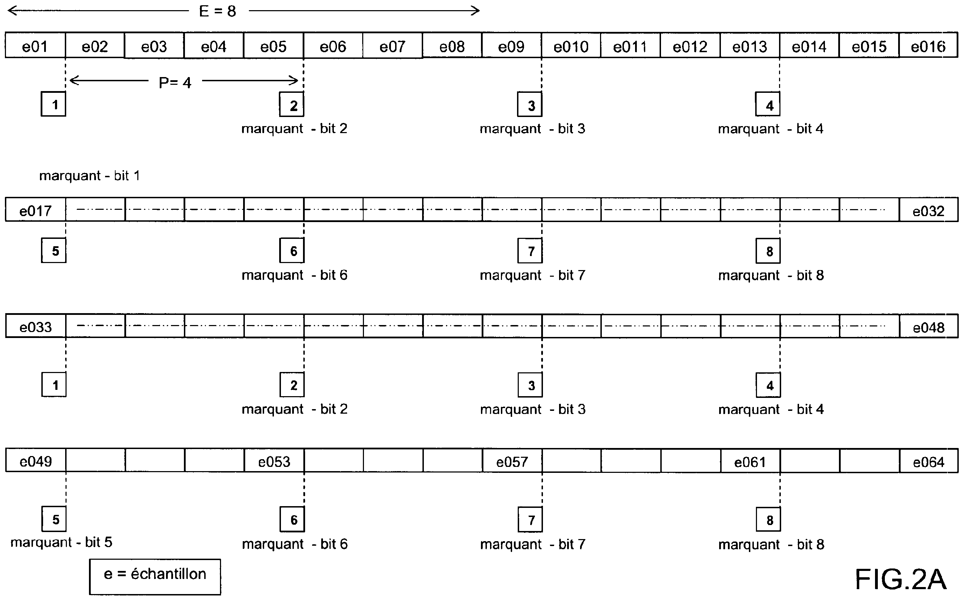

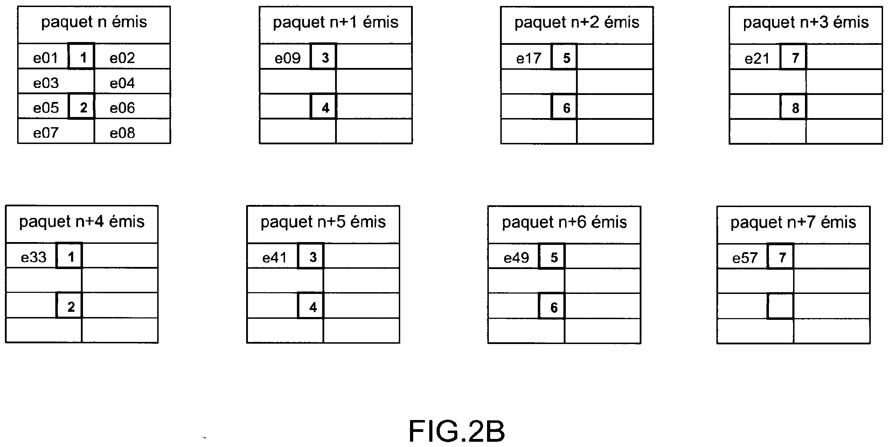

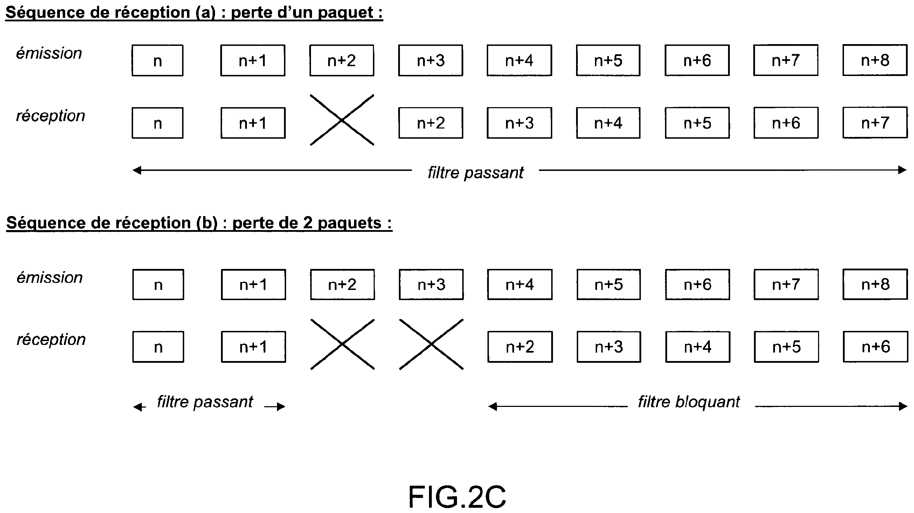

Les figures 2A, 2B et 2C représentent des exemples d'intégration de marquants dans les flux audio.

Le principe de marquant concerne notamment les réseaux locaux numériques de télécommunication caractérisés par :
L'utilisation simultanée d'un protocole dédié à la signalisation (établissement et libération des communications) et d'un protocole dédié aux flux audio.
La transmission en mode paquet avec une garantie de la chronologie des paquets.

A titre d'exemple, ce principe est applicable au réseau de VoIP exploitant les protocoles H323 ou SIP ou MGCP.

Cette invention est appliquée à des flux IP transportant au moins un canal audio (flux audio) dont l'encodage est apte à subir un marquage qui provoque une dégradation de qualité audio acceptable. L'enseignement est donc limité à de tels encodages et doit être adapté aux caractéristiques particulières de l'encodage retenu. Sur un réseau local, on utilise préférentiellement l'encodage G711 de l'ITU-T en loi A et / ou loi mu. En général le codage d'un tel flux IP est réalisé coté émetteur du flux IP conformément à une pile protocolaire IP / VoIP d'encodage et comporte la mise en oeuvre d'un canal virtuel RTP (Real Time Protocol) pour assurer le transport de bout en bout des charges audio dans des paquets IP. Le flux IP peut subir exceptionnellement des pertes de paquets IP ou un déséquencement. Une pile protocolaire IP / VoIP de décodage effectue coté réception du flux IP, le réordonnancement des charges constituant le flux audio dans la limite d'un tampon anti-gigue, l'introduction éventuelle de charges de substitution en cas de perte de paquet IP ou de gigue supérieure au seuil admissible par le tampon anti-gigue, et reconstitue le train audio numérique dans la loi de codage applicable.

Coté émetteur, un dispositif inséré en coupure sur le flux audio, intègre au flux audio des informations d'identification, qui ne peuvent être séparées celui-ci.

Le système comprend, par exemple, un dispositif d'insertion du marquant selon la période choisie afin de garantir une répartition du marquant sous-multiple de la période d'émission du paquet audio.

Coté réception, un dispositif inséré en coupure sur le flux audio analyse le flux audio et autorise le passage de ce dernier uniquement si le marquant a été trouvé.

Dans un réseau numérique le signal audio est périodiquement échantillonné, codé puis compressé. Chaque échantillon représente donc l'amplitude instantanée du signal. Quelle que soit la loi de codage utilisée, le bit de poids faible (LSB) d'un échantillon est le moins significatif. Il est donc possible d'altérer périodiquement ce dernier bit sans dégrader de façon importante la qualité du signal.

Dans un réseau de transmission par paquet non synchrone, la perte d'un paquet contenant le flux audio n'est pas à exclure (gigue, saturation momentanée, glissement d'horloge). Par conséquent le mécanisme d'insertion et filtrage de marquant doit être robuste à la perte de paquet.

Les paramètres caractérisant le marquant sont, par exemple, fonctions des performances attendues (exemple : temps de latence, rapport signal/bruit), des caractéristiques de l'encodage, en particulier de la taille des blocs d'audio encodée (1 octet dans le cas de la loi G711), de la position des bits de poids faibles apte à subir le marquage, des caractéristiques du protocole notamment le nombre d'échantillons ou de blocs encodés transmis par paquet, des performances du réseau (taux d'erreur de transmission).

Dans le cas particulier du codage G711, ces paramètres du marquant sont choisis, par exemple, parmi la liste suivante:
∘ La longueur du marquant (L)
∘ Le pas (P) indiquant le nombre d'échantillon entre 2 bits du marquant
∘ L'intervalle (N) entre 2 marquants.
Dans un mode particulier où N=0, le pas (P) est un sous-multiple du nombre (E) d'échantillons transmis dans un paquet d'encodage par la pile IP / VoIP coté émetteur du flux IP. Les bits de marquant sont alors positionnés dans des octets de même rang dans les charges des paquets IP successifs du canal RTP.

Cet agencement permet une défense optimale contre les pertes de paquets IP susceptibles d'affecter le canal RTP. D'une part la mise en oeuvre de la fonction filtre est simplifiée, d'autre part, il est alors avantageux de configurer le nombre admissible de bit erronés successifs dans un marquant à E/P de manière permettre la perte d'un paquet IP sans provoquer un blocage du filtre.

De plus, pour simplifier l'implémentation de la fonction filtre, il est souhaitable que le pas (P) soit un sous multiple du nombre d'échantillons transmis dans un paquet (E).

Dans notre exemple de la figure 2A, le marquant est caractérisé par : E=8, L=4, P=4, N=0.

Le filtre fonctionne selon 2 phases :
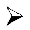 Recherche de marquant : durant cette phase, le filtre cherche la synchronisation dans le flux audio du marquant. Lorsque le marquant est trouvé, le filtre devient passant. Dans une variante, il est possible de laisser passant le filtre durant la recherche du marquant sur une période qui n'excède LxPxN.
   Dans un mode particulier non exclusif du mode particulier précédent, la recherche du marquant est initiée seulement sur activation d'un signal d'alternat PTT (Push-to-Talk) par l'émetteur du flux IP transporté par exemple dans le protocole RTCP du canal RTP du flux IP, et plus particulièrement par le positionnement d'un ou de plusieurs bit M dudit protocole. Ce mode permet en option de fixer une durée maximale de recherche active du marquant et en option de déclencher une signalisation (par exemple une tonalité sur la voie de retour de la communication) lorsque le marquant n'est pas détecté en tout ou partie selon le cas de figure. L'opérateur d'un terminal AUT dont la fonction ISI insère le marquant peut ainsi être prévenu d'une anomalie au niveau du filtre FISI N1 ou FISI N2 coté réception du flux IP. Une telle alerte indique à l'opérateur une erreur d'aiguillage du flux IP selon l'optimisation du procédé, soit vers la passerelle filtrante analogique d'un des types A-GTW-N1, A-GTW-N2, ou des deux types, soit éventuellement dans un mode particulier vers la passerelle filtrante RNIS RNIS-GTW-N2.
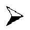 Détection de perte de marquant : le filtre passe dans cette phase lorsqu'il est synchronisé. Dans cette phase, le filtre vérifie si dans le paquet reçu les marquants attendus sont disponibles. Dans le cas où le marquant attendu est absent, le filtre vérifie si le marquant reçu correspond à la séquence du marquant décalé de n x E échantillons, si tel est le cas le filtre reste passant, avec « n » représente le nombre de paquets autorisés à être perdu sans altération de la qualité de la transmission.
Les figures 2B et 2C illustrent un cas particulier de l'exemple précédant où le paramètre "n" vaut 1.

La figure 2B présente un extrait de la séquence de paquets constituant le flux audio muni de son marquage comme défini précédemment. Les paquets émis dans l'ordre de la numérotation (n) à (n+7) comportent un marquage dans les échantillons selon l'enseignement précédent: les bits successifs constituant les positions successives du marquant sont représentés par des chiffres croissants encadrés, et positionnés dans le bit de poids faible (LSB) des échantillons marqués.

Dans l'exemple de la "Séquence de réception (a) : perte d'un paquet" de la figure 2C, lorsque le filtre reçoit le paquet « n+3 », il s'attend à recevoir les bits « 5 » et « 6 » du marquant. En comparant le paquet reçu, le filtre constate l'absence des bits « 5 » et « 6 ». Toutefois, il détecte la présence des bits « 7 » et « 8 » et donc reste passant.

Dans l'exemple de la "Séquence de réception (b) : perte de 2 paquets" de la figure 2C, lorsque le filtre reçoit le paquet « n+4 », il s'attend à recevoir les bits « 5 » et « 6 » du marquant. En comparant le paquet reçu, le filtre constate l'absence des bits « 5 » et « 6 » et ne détecte pas la présence des bits « 7 » et « 8 », par conséquent le filtre devient bloquant.

Le dispositif de filtrage est par exemple adapté à accepter une perte de paquet sans perte de détection de marquage et donc de blocage du flux audio.

### Application aux cloisonnements de réseaux

Dans l'exemple illustré par la figure 1, le principe de sécurisation des fonctions filtrage / marquage consiste, respectivement, à insérer / analyser un marqueur représentatif de la sensibilité de l'information dans les données transportées.

Ce marqueur est inséré par un dispositif conforme au principe définit ci-dessus réalisé selon les techniques connues de l'homme du métier.

Le marqueur permet de prévenir l'utilisateur du terminal raccordé sur le réseau N1 de la sensibilité de la communication.

Ces fonctions sont implémentées :
∘ dans les terminaux d'usager (fonction de marquage ISI)
∘ dans la passerelle filtrante RNIS RNIS-GTW-N2 (fonction filtrage FISI)
∘ dans les passerelles filtrantes analogiques A-GTW-N1 ou A-GTW-N2 le nécessitant (fonction filtrage FISI),
Dans les terminaux AUT 26 la fonction de marquage du terminal insère, si nécessaire, un marqueur par un mécanisme en coupure et informe l'usager du marqueur inséré par un mécanisme visuel (Leds et affichage, par exemple).

Dans les passerelles filtre, le mécanisme de filtrage vérifie le marquage et autorise uniquement la sortie des flux dont le marqueur est cohérent avec le niveau de sensibilité de la communication. Cette fonction permet de se prémunir contre un éventuel défaut de routage des flux.

### Fonction marquage (ISI)

Dans cet exemple de réalisation, il existe 3 marqueurs possibles pour les flux :
∘ Marqueur N1 : pour les flux "sensibles" à destination de l'extérieur,
∘ Marqueur N2 : pour les flux "non sensibles" autorisés à sortir du réseau N1,
∘ Pas de marqueur : pour les flux restant internes au réseau N1.
Sans sortir du cadre de l'invention, et en fonction des applications visées, il est possible d'imaginer d'autres types de marqueurs.

Les flux échangés sur le réseau N1 ont les caractéristiques de marquage suivantes :
∘ Flux N1 sortant du réseau N1 (via les chaînes radio chiffrée, 16) :marquage N1
∘ Flux N1 internes au réseau N1 (entre AUT,) : pas de marquage
∘ Flux N1 entrant dans le réseau N1 (via les chaînes radio chiffre) :pas de marquage
∘ Flux N2 sortant du réseau N1 : marquage N2 (via les chaînes radio clair, ou communication avec les IP-phones, les postes radio MUT, le diffuseur d'ordre et d'alertes DOA, le téléphone UWT)
∘ Flux N2 en provenance du réseau N2 entrant dans le réseau N1 : pas de marquage (communication avec les IP-phones et les postes radio MUT qui sont les terminaux du Système PMR)
∘ Flux N2 entrant dans le réseau N1 par une passerelle filtrante analogique A-GTW-N1 : pas de marquage (via les chaînes radio clair ou communication avec le UWT ou "conférence" avec un poste radio MUT).
Un mécanisme de visualisation peut être couplé à ce marquage. Ce mécanisme est réalisé par exemple au moyen de 2 Leds implantées sur les terminaux AUT. La combinaison d'états des 2 leds permet d'alerter l'usager du niveau de sensibilité des flux audio. En complément un affichage de couleurs sur l'écran du terminal peut indiquer le niveau de sensibilité des communications à établir, par exemple :
∘ rouge pour les communications "sensibles",
∘ bleu pour les communications "non sensibles".
Dans un mode préférentiel, la fonction d'insertion de marqueurs ISI, implémentée dans les terminaux AUT, marque les flux et active les Leds, au moyen d'un composant FPGA, de la façon suivante :

**TABLEAU II**

| Flux | Marqueur | Led 1 (verte) | Led 2 (rouge) |
|---|---|---|---|
| Sortant sur chaîne radio claire 15 | Marqueur N2 | Eteinte | Clignotant rouge |
| Sortant sur chaîne radio chiffrée 16 | Marqueur N1 | Verte fixe | Eteinte |
| Restant interne au réseau N1 | Pas de marqueur | Verte fixe | Eteinte |
| Sortant vers réseau N2 | Marqueur N2 | Eteinte | Clignotant rouge |
| Sortant vers équipement N2 raccordé sur une passerelle A-GTW (UWT) | Marqueur N2 | Eteinte | Clignotant rouge |
| Sortant vers la radio PMR | Marqueur N2 | Eteinte | Clignotant rouge |

Des variantes réalisation de la fonction de marquage peuvent être mises en oeuvre par l'homme de métier sans sortir du cadre de l'invention.

### Fonction de filtrage (FISI)

La fonction implémentée dans les passerelles de filtrage, analyse le marquage des flux et effectue les opérations de filtrage (permettant l'autorisation de la sortie d'un flux ou non d'un réseau).

Le système possède une fonction de filtrage « FISI N1 » qui traite les flux de niveau de sécurité N1 et une fonction de filtrage « FISI N2 » qui traite les flux de niveau de sécurité N2.
∘ Fonction "FISI N1" : La fonction vérifie que le flux est marqué N1 et elle le bloque si ce n'est pas le cas.
∘ Fonction "FISI N2" : La fonction vérifie que le flux est marqué N2 et elle le bloque si ce n'est pas le cas.

### Conférenceur

Sur le réseau de niveau N1, les types de communications suivantes nécessitent un conférenceur :
∘ Enregistrement des communications (pour diffuser les flux à la fois vers l'enregistreur N1 et vers le terminal destinataire),
∘ Conférence entre terminaux AUT,
∘ Télébrief.
Sur le réseau N2, les communications de type "Diffusion d'Ordres et Alertes", via le sous-système DOA 8, pour la diffusion vers les différents haut-parleurs et klaxons, nécessitent un conférenceur.

Chaque réseau, N1 et N2, possède son propre conférenceur MCU N1, 12, pour le réseau N1 et MCU N2, 5, pour le réseau N2.

Les conférenceurs (MCU) sont, par exemple, des équipements dits équipements sur étagères COTS. Ils effacent tout marquage ; les flux en sortie de ces équipements ne sont plus marqués, quel que soit leur marquage en entrée. Certaines passerelles filtrantes analogiques A-GTW possèdent leur propre conférenceur intégré.

### Communications avec les postes radio MUT

Les communications entre postes radio MUT, en mode direct ou "talk group" restent internes au système PMR 9.

Les communications point à point, entre un poste radio MUT et un terminal AUT ou entre un terminal MUT et un IP-Phone, transitent par la "passerelle RNIS" (P_RNIS) 22 du système PMR et par l'IP-BX 4.

Les diffusions vers le DOA 8, initialisées par un poste radio MUT, transitent par la "passerelle RNIS" (P_RNIS) 22 du système PMR 9 et par l'IP-BX 4.

Les communications de type "conférence" (poste radio MUT participant à une conférence entre terminaux AUT ou AUT participant à un "talk group") transitent par la "passerelle radio mobile / analogique" (ANALOG) 27 du système PMR et par une passerelle filtrante analogique A-GTW-N2 21 muni d'un filtre N2. Les "conférences" de type "poste radio MUT participant à une conférence entre un terminal AUT" nécessitent un conférenceur ; c'est le conférenceur intégré à la passerelle filtrante analogique A-GTW-N2 21 qui est mis en oeuvre. Les "conférences" de type "talk group" sont traitées au niveau du système PMR.

### Enregistrement des communications

Les différents types de communications sont enregistrés par exemple selon les modalités suivantes :
∘ Les communications entre terminaux AUT 26 et IP-Phone 3 sont enregistrées par l'enregistreur Enreg. N1, 14 du réseau N1, 1.
∘ Les communications point à point entre un terminal AUT 26 et un poste radio MUT 28 sont enregistrées par l'enregistreur Enreg. N2, 7 du réseau N2, 2,
∘ Les communications vers le Diffuseur d'Ordres et Alertes DOA, 8 sont enregistrées par l'enregistreur Enreg N2, 7 du réseau N2, 2,
∘ Les communications empruntant les chaînes radio (clair ou chiffrée), sont enregistrées par l'enregistreur Enreg. N1, 14 du réseau N1, 1 et le conférenceur utilisé est celui intégré à la passerelle filtrante analogique A-GTW raccordant la chaîne radio: A-GTW-N1, 18 ou A-GTW-N2, 17,
∘ Les communications avec l'équipement UWT, 11 sont enregistrées par l'enregistreur Enreg. N1, 14 du réseau N1, 1 ; le conférenceur utilisé est celui intégré à la passerelle filtrante analogique A-GTW-N2, 19 raccordant l'équipement UWT, 11.

### Retour radio

Dans le cas des communications sortant par des chaînes radio, un "retour radio" est émis de la passerelle filtrante analogique A-GTW-N1, 18 ou A-GTW-N2, 17, passerelle analogique A-GTW-N1, 18 ou A-GTW-N2, 17 correspondante, vers l'ensemble des terminaux AUT, 26 participant à la chaîne radio considérée et / ou vers l'enregistreur Enreg. N1, 14. Ces flux en sortie d'une passerelle filtrante analogique A-GTW ne sont plus marqués, quel que soit leur marquage en entrée.

Une façon de mettre en oeuvre l'invention est décrite ci-après.

### Choix des paramètres du marquant:

La loi d'encodage de l'audio est le G711 de l'ITU-T.

Le pas (P) indiquant le nombre d'échantillons entre 2 bits consécutifs du marquant sera préférentiellement compris entre 4 et 16, la valeur 4 correspondant au seuil de bruit acceptable qui est introduit par le marquant dans le flux audio. Le nombre (E) d'échantillons dans un paquet sera préférentiellement une des valeurs usuelles en Voix sur IP, par exemple pour un codage G711 loi A ou µ : 80 octets (10 millisecondes d'audio encodée en G711), 160 octets (20 millisecondes d'audio encodée en G711), 240 octets (30 millisecondes d'audio encodée en G711).

La longueur du marquant est comprise entre quelques dizaines de bit et peut atteindre une valeur élevée, par exemple 10000 lorsque P est faible. La limite supérieure provient de la contrainte temporelle de détection du marquant en tout ou partie par le filtre FISI N1 ou FISI N2 : par exemple L=4096, P=8, et N=0 correspond à une durée d'insertion du marquant dans le flux audio d'environ 4 secondes. Si les marquants N1 et N2 sont choisis suffisamment différents, il est alors possible dans une variante de configurer le filtre pour qu'il bascule à l'état passant en avance après détection d'une partie du marquant (par exemple 128 bits qui représentent 128 millisecondes avec les valeurs de paramètres ci-dessus). Il est aussi possible dans une autre variante que le filtre FISI N1 ou FISI N2 soit passant dès détection d'une signalisation de PTT associée au flux audio et se bloque lorsqu'il n'a pas détecté une partie du marquant après un certain délai. Cette dernière variante a l'avantage de ne pas supprimer les premiers phonèmes transportés par le flux audio contrôlé par la passerelle filtrante analogique A-GTW-N1, A-GTW-N2 ou par la passerelle filtrante RNIS RNIS-GTW-N2.

Un avantage de l'invention est que l'emploi de marquants dont la longueur L est élevée, optionnellement couplé à une valeur de N non nulle, rendent difficile la détection du marquant par une analyse des paquets des flux audio marqués. Des variantes de choix des paramètres du marquant sont envisageables sans sortir du cadre de l'invention.

### Choix des deux marquants N1 et N2:

Les marquants doivent être au minimum différant lors de toute comparaison après toutes rotations circulaires d'un des marquants par rapport à l'autre.

Lorsque le filtre est conçu pour se débloquer (ou se bloquer) en anticipation après la réception d'une partie seulement du marquant, les marquants N1 et N2 doivent différer l'un de l'autre sur toute portion de longueur de la partie considérée, pour toutes rotations circulaires d'un des marquants par rapport à l'autre. Bien évidemment, l'homme de l'art pourra définir des marquants ayant des propriétés particulières sans sortir du cadre de l'invention.

### Réalisations des mises en relation des constituants du système:

Dans le cadre de l'architecture présentée à la Figure 1, la meilleure manière de mettre en relation les constituants du système est présentée dans les tableaux qui sont introduits ci-dessous. Trois grandes catégories de mises en relation sont développées:
∘ Tableau III : Communications point à point (sans enregistrement)
∘ Tableau IV : Communications point à point avec enregistrement
∘ Tableau V : Conférences.
Ces tableaux regroupés dans l'annexe récapitulent, pour tous les échanges de flux possibles, les équipements traversés, les actions effectuées par les équipements traversés et les protocoles mis en oeuvre. Les flux concernés sont les flux audio échangés, hors signalisation et après établissement des communications.

Pour chaque catégorie de mises en relation, les principaux constituants considérés comme origine ou destination des flux audio sont les terminaux d'inter-phonie (AUT), les postes radio (MUT) du sous-système PMR, les terminaux IP-Phone, les téléphones sous-marins (UWT), le sous-système Radio Claire et le sous-système Radio Chiffré. Dans certains cas d'emploi, le sous-système Radio Chiffrée ou Radio Claire génère un contrôle de modulation (side tone): ce contrôle de modulation peut être généré au niveau de la passerelle filtrante analogique A-GTW par recopie de la voie émission avant l'application de la fonction filtre de marquant. Il peut constituer le point de départ d'un flux audio autonome dont l'origine est dénommée Retour Radio Chiffrée ou Retour Radio Claire, ou bien être mixé avec la voie radio réception au moyen d'un conférenceur dans l'A-GTW.

Les principaux constituants en transit des flux audio ou en enregistrement sont: l'autocommutateur téléphonique IP-BX (en technologie voix sur IP avec accès RNIS), les passerelles filtrantes analogiques A-GTW-N1, A-GTW-N2, les LAN N1 et N2, les enregistreurs de flux audio (Enreg. N1, Enreg. N2), les conférenceurs (MCU N1, MCU N2) permettant de dupliquer un flux audio de point à multipoints, le Diffuseur d'Ordre et d'Alerte (DOA). Les sous-systèmes Radio Claire et Radio Chiffrée comportent un équipement Emetteur/Récepteur (E/R), et éventuellement un équipement cryptographique (crypto) dans le cas Radio Chiffrée.

L'homme de métier peut étendre les enseignements techniques qui suivent à des variantes de l'architecture comportant d'autres constituants ou d'autres mises en relation.

Les tableaux détaillent la mise en oeuvre de chacune des trois catégories de mises en relation entre différents constituants: les lignes du tableau (libellé "Origine") correspondent à des flux dont l'origine est le constituant indiqué et dont la (ou les) destination(s) est le constituant indiqué dans le libellé de la colonne (libellé "Destination"). Deux sous-colonnes non matérialisées par un trait séparateur sont libellées "Equipement" et "Protocole Action". La sous-colonne "Equipement" liste des constituants traversés successivement par le flux audio (départ, transit, destination) et la sous-colonne "Protocole Action" liste en regard de chaque constituant des informations de traitement applicables au flux audio qui traverse le constituant, et /ou au constituant lui-même.

Les protocoles listés sont : IP, RNIS et BF: BF signifie "Basse Fréquence" et signifie une représentation du flux audio sous une des formes analogiques bien connues de l'homme de métier, par exemple en bande de base (300-3000Hz). Les actions listées sont de différentes natures:
Les actions en relation avec l'insertion éventuelle du marquant dans le flux audio sont interprétées selon le tableau II: "Pas de marque" signifie qu'il n'y a pas d'insertion de marqueur dans le flux audio. "Marque N1" signifie insertion du marquant N1 dans le flux audio, "Marque N2" signifie insertion du marquant N2 dans le flux audio, "Led1 verte" signifie que la Led 1 est "Verte fixe". "Led1 éteinte" signifie que la Led 1 est "Eteinte". "Led2 éteinte" signifie que la Led 2 est "Eteinte". "Led2 rouge clig" signifie que la Led 2 est "Clignotante rouge".
Les actions en relation avec les passerelles filtrantes analogiques A-GTW-N1, A-GTW-N2, et RNIS-GTW-N2 sont : "Filtre" qui signifie détecter le marquant N1 ou N2 configuré dans la passerelle filtrante analogique considérée, "Diffuse vers" qui signifie un action de duplication du flux vers plusieurs constituants nommés, "démarque" qui signifie la suppression du marquant N1 ou N2 dans un flux audio, "IP -> BF" qui signifie le transcodage du flux audio sous forme de paquet IP en la forme analogique BF, "BF -> IP" qui signifie le transcodage du flux audio sous forme analogique BF en la forme d'un flux audio sous forme de paquets IP, "RNIS -> IP" qui signifie le transcodage du flux audio sous forme de canal numérique en la forme d'un flux sous forme de paquets IP, "IP -> RNIS" qui signifie le transcodage du flux audio sous forme de paquets IP en la forme d'un canal numérique.

Les actions en relation avec un équipement "crypto" sont: "Chiffre" qui signifie chiffrer un signal audio BF pour obtenir un signal fonction de l'équipement cryptographique, par exemple BF modulé, "Déchiffre" qui signifie déchiffrer un signal fonction de l'équipement cryptographique pour produire un signal audio BF.

Les actions en relation avec un constituant "Enreg." sont: "Enregistre" qui signifie enregistrer le flux audio correspondant au flux IP dans l'enregistreur.

Les actions en relation avec le sous-système PMR sont: "Coté RNIS" qui signifie que la liaison est mise en oeuvre via l'IP-BX / accès RNIS, "Coté analog" qui signifie que la liaison est mise en oeuvre via une passerelle analogique.

Les actions en relation avec un constituant "MCU" sont: "Démarque" qui signifie un traitement qui a pour effet que le ou les flux IP générés n'ont pas de marquage (qu'il ait eu ou non un marquage précédemment), "Diffuse vers" qui signifie dupliquer le flux IP vers un ou plusieurs destinataires.

### Interprétation du tableau III: Communications point à point (sans enregistrement):

Une case "X" signifie que le flux d'origine (libellé de la ligne indiquée) ne peut pas atteindre la destination (libellé de la colonne indiquée).

### Exemple de lecture de la case : Origine "AUT" / Destination "AUT":

Le flux audio est encodé dans l'AUT 1 sans marquant, la Led 1 est verte fixe et la Led 2 est rouge clignotante sur le terminal AUT 1 (émetteur du flux audio). Le flux audio transite par le LAN N1 en utilisant le protocole IP. Le destinataire est un terminal AUT 2.

### Exemple de lecture de la case : Origine "AUT" / Destination "Radio Chiffre" :

Le flux audio est encodé dans l'AUT 1 avec marquant N1, la Led 1 est verte fixe et la Led 2 est rouge éteinte sur le terminal AUT 1 (émetteur du flux audio). Le flux audio transite par le LAN N1 en utilisant le protocole IP. Le flux transite par la passerelle filtrante analogique A-GTW-N2 qui est passante en présence du marquant N2, démarque le flux en le convertissant en un signal BF, ledit signal étant crypté dans l'équipement cryptographique "Crypto" pour être émis par l'émetteur/récepteur (E/R).

Les autres cas traités par le tableau III s'interprètent de manière similaire au moyen des informations précédentes et enseignent à l'homme de métier les mises en relations de type point à point sans enregistrement du système selon l'invention.

### Interprétation du tableau IV: Communications point à point avec enregistrement:

Une case "X" signifie que le flux d'origine (libellé de la ligne indiquée) ne peut pas atteindre la destination (libellé de la colonne indiquée).

### Exemple de lecture de la case : Origine "AUT" / Destination "AUT" :

Le flux audio est encodé dans l'AUT 1 sans marquant, la Led 1 est verte fixe et la Led 2 est rouge clignotante sur le terminal AUT 1 (émetteur du flux audio). Le flux audio transite par le LAN N1 en utilisant le protocole IP. Le destinataire intermédiaire est le conférenceur MCU N1 qui démarque le flux IP et le diffuse le flux audio correspondant vers un terminal AUT 2 d'une part et vers un enregistreur Enreg. N1 d'autre part. Chacun de ces flux audio est encodé dans un flux IP qui traverse le LAN N1 en utilisant le protocole IP.

Les autres cas traités par le tableau IV s'interprètent de manière similaire au moyen des informations précédentes et enseignent à l'homme de métier les mises en relations de type point à point avec enregistrement du système selon l'invention.

### Interprétation du tableau V: Conférences :

Une case "X" signifie que le flux d'origine (libellé de la ligne indiquée) ne peut pas atteindre la destination (libellé de la colonne indiquée).

### Exemple de lecture de la case : Origine "AUT" / Destination "AUT":

Le flux audio est encodé dans l'AUT 1 sans marquant, la Led 1 est verte fixe et la Led 2 est rouge clignotante sur le terminal AUT 1 (émetteur du flux audio). Le flux audio transite par le LAN N1 en utilisant le protocole IP. Le destinataire intermédiaire est le conférenceur MCU N1 qui démarque le flux IP et le diffuse le flux audio correspondant vers plusieurs terminaux AUT. Chacun de ces flux audio est encodé dans un flux IP qui traverse le LAN N1 en utilisant le protocole IP.

Les autres cas traités par le tableau V s'interprètent de manière similaire au moyen des informations précédentes et enseignent à l'homme de métier les mises en relations de type conférences du système selon l'invention.

### Résumé de l'invention:

L'invention principale concerne un système permettant des échanges de données, entre au moins deux domaines de niveau de sécurité N1 et de niveau de sécurité N2, le premier domaine ayant un niveau de sécurité N1 supérieur au niveau de sécurité N2 du deuxième domaine. Le premier domaine de sécurité de niveau N1 comprend un réseau N1, 1 transportant des flux audio utilisant au moins les protocoles Internet IP et VoIP, comportant au moins les éléments suivants :
o des moyens ISI, permettant d'insérer un marquant N1 ou N2 dans des flux audio en fonction de leur niveau de sécurité, lesdits moyens étant positionnés dans des terminaux AUT, 26, raccordés au réseau N1, 1, du domaine de niveau de sécurité N1,
o des moyens FISI N1 et FISI N2, permettant de filtrer des flux audio, ledit ou lesdits moyens FISI N1 étant positionnés dans au moins une passerelle filtrante, 17, 18, 20, et ledit ou lesdits moyens FISI N2 étant positionnés dans au moins une autre passerelle filtrante, 17, 19, 21, 24, lesdites passerelles étant raccordées au réseau N1, 1, du domaine de niveau de sécurité N1, lesdites passerelles étant adaptées à réaliser une rupture de protocole, et une procédure de filtrage, selon le cas, FISI N1 ou FISI N2, des flux audio, consistant à détecter la présence d'un marquant N1 ou N2 dans le flux audio issu du réseau N1, et à contrôler le transit dudit flux audio en relation avec la cohérence entre le marquant détecté et le marquant configuré dans ladite passerelle.
Dans un mode particulier du système principal, des flux audio sont constitués par un canal particulier d'une session de communication multimédia.

Dans un autre mode particulier du système principal ou du système précédent, le système comporte au moins une des passerelles filtrantes qui est du type RNIS-GTW-N2, 24, connectée à un IP-BX, 4, cette passerelle filtrante RNIS-A-GTW-N2 étant adaptée à traduire en protocole RNIS, les flux audio VoIP issus du réseau de niveau N1, 1. Les flux échangés entre cette passerelle filtrante RNIS-A-GTW-N2 et cet IP-BX sont des flux RNIS.

Dans un mode particulier du système précédent, l'IP-BX, 4, ou au moins un des IP-BX, est connecté à un réseau N2, 2, de niveau de sécurité N2.

Les deux modes particuliers précédents du système sont dénommés "systèmes à passerelle filtrante RNIS RNIS-GTW-N2".

Dans un mode particulier de l'un quelconque des "systèmes à passerelle filtrante RNIS RNIS-GTW-N2" définis plus haut, le système comporte un dispositif radio professionnel, 9, comprenant plusieurs radios mobiles reliées au réseau N2, 2, de niveau de sécurité N2 via une passerelle RNIS, P_RNIS, 22, et le dispositif IP-BX, 4.

Dans un autre mode particulier de l'un quelconque des "systèmes à passerelle filtrante RNIS RNIS-GTW-N2" définis plus haut, le système comporte un dispositif radio professionnel, 9, comprenant plusieurs postes radio, les postes radio étant en liaison avec des terminaux AUT, 26, via une passerelle analogique, 27, du dispositif et une passerelle filtrante analogique, 21.

Dans un autre mode particulier de l'un quelconque des "systèmes à passerelle filtrante RNIS RNIS-GTW-N2" définis plus haut, le système comporte un IP-BX, 4, ou au moins un des IP-BX qui est connecté à une passerelle RNIS P_RNIS, 22, elle-même en relation avec les postes MUT, 28, d'un sous-système PMR, 9, lesdits postes MUT étant eux-mêmes en relation avec une passerelle analogique ANALOG, 27, elle-même interconnectée avec une des passerelles filtrantes A-GTW-N2, 21, raccordé au réseau N1, 1.

Dans un mode particulier de l'un quelconque des systèmes précédents, le système comprend un équipement de type analogique, 11, 27, 15, du domaine de niveau de sécurité N2 qui est en liaison avec le réseau N1, 1, de niveau de sécurité N1 grâce à une des passerelles filtrantes analogiques qui est munie du moyen FISI N2. Cette passerelle filtrante analogique est de type A-GTW-N2, 19, 21, 17. Cette passerelle filtrante analogique est adaptée à effectuer la rupture de protocole nécessaire entre l'analogique et le protocole IP, la rupture de protocole consistant à transformer en signal audio BF les flux audio reçus du réseau N1, qui sont munis dudit marquant N2, à destination des équipements audio et à transformer en flux audio encodé en VoIP les signaux audio BF reçus de cet équipement de type analogique ayant pour destination un équipement ou un terminal AUT, 26, raccordé au réseau N1.

Dans un mode particulier de l'un quelconque des systèmes précédents, le système comprend un équipement de type analogique, 10, 16, du domaine de niveau de sécurité N1, qui est en liaison avec le réseau N1, 1, de niveau de sécurité N1 grâce à une des passerelles filtrantes analogiques qui est munie du moyen FISI N1. Cette passerelle filtrante analogique est de type A-GTW-N1, 20, 18. Cette passerelle filtrante analogique est adaptée à effectuer la rupture de protocole nécessaire entre l'analogique et le protocole IP, la rupture de protocole consistant à transformer en signal audio (BF) les flux audio reçus du réseau N1, qui sont munis dudit marquant N1, à destination desdits équipements audio et à transformer en flux audio encodé en VoIP les signaux audio (BF) reçus de l'équipement de type analogique ayant pour destination un équipement ou un terminal AUT, 26, raccordé au réseau N1.

Dans un mode particulier de l'un quelconque des systèmes précédents, le système comprend au moins un des moyens ISI positionnés dans un terminal AUT, 26, qui est adapté à commander un affichage, par exemple au moyen de Leds raccordées directement, afin de confirmer l'insertion d'un marquant N1 ou N2 dans le flux audio généré vers le réseau N1, 1.

Dans un mode particulier de l'un quelconque des systèmes précédents, le système comprend au moins un des moyens ISI positionnés dans un terminal AUT, 26, qui est adapté à insérer le marquant selon une période choisie afin de garantir une répartition du marquant sous-multiple de la période d'émission du paquet audio.

Dans tous les modes du système les marquants N1 ou N2 diffèrent l'un de l'autre d'au moins un bit au minimum, lors de toute comparaison après toutes rotations circulaires d'un des marquants par rapport à l'autre.

Dans un mode particulier de l'un quelconque des systèmes précédents, le système comprend des marquants N1 ou N2 qui diffèrent l'un de l'autre d'au moins un bit, sur toute portion d'une longueur donnée, au minimum lors de toute comparaison après toutes rotations circulaires d'un des marquants par rapport à l'autre, ladite longueur donnée étant en relation avec un seuil de détection, soit de blocage, soit d'autorisation de transit, dudit flux audio, dans au moins un desdits moyen FISI-N1 ou FISI-N2 correspondant.

Dans un mode particulier de l'un quelconque des systèmes précédents, le système comprend au moins un des moyens FISI positionnés dans une des passerelles filtrantes qui est adapté à émettre dans la voie retour du flux audio une tonalité d'alerte de non-détection du marquant configuré, lorsque le marquant n'a pas été détecté après un délai en relation avec la détection d'un signal PTT transporté dans l'encodage VoIP dudit flux audio.

Dans un mode particulier du mode particulier précédent, le système comprend un transport du signal PTT, soit dans au moins un bit M encodé dans le protocole RTP dudit flux audio, soit dans la signalisation RTCP encodé dans le protocole RTP dudit flux audio, soit encore dans la bande audio des charges encodé dans le protocole RTP.

Dans un mode particulier de l'un quelconque des systèmes précédents, le système comprend un dispositif de filtrage adapté à accepter une perte de paquet sans perte de détection de marquage et donc de blocage du flux audio.

Dans un mode particulier de l'un quelconque des systèmes précédents, le système comprend l'encodage d'au moins un des flux audio qui est effectué avec le format G711 loi A ou loi mu.

En conclusion le système selon l'invention offre notamment les avantages suivants :
∘ Permettre à un même usager de : communiquer avec d'autres usagers appartenant au même domaine, communiquer avec d'autres usagers appartenant à un autre domaine, diffuser un signal sonore dans un espace (et donc dans un domaine de niveau de sécurité inférieur), communiquer avec des interlocuteurs distants, par des moyens radio chiffré et non chiffré, communiquer avec des interlocuteurs raccordés sur un PABX,
∘ Enregistrer des échanges audio,
∘ S'assurer que les flux audio d'un niveau de sécurité supérieur ne transitent pas accidentellement sur un niveau de sécurité inférieur,
∘ Pour plusieurs services (diffusion, conférence, enregistrement) répondre au besoin d'émettre un même flux audio vers plusieurs équipements,
∘ Permettre l'utilisation d'équipements COTS afin d'offrir dans une architecture sécurisée afin d'offrir des solutions évolutives en terme de services à l'utilisateur,
∘ Mettre en oeuvre des niveaux de sécurité ad hoc pour l'ensemble des services (y compris la diffusion d'ordres et d'alertes et les services téléphoniques),
∘ Réduire les coûts de développement et d'accréditation des constituants du système en utilisant 2 fonctions (ISI et FISI) qui sont configurées pour des marqueurs ad hoc.
∘ Extension à d'autres architectures et à d'autres services.

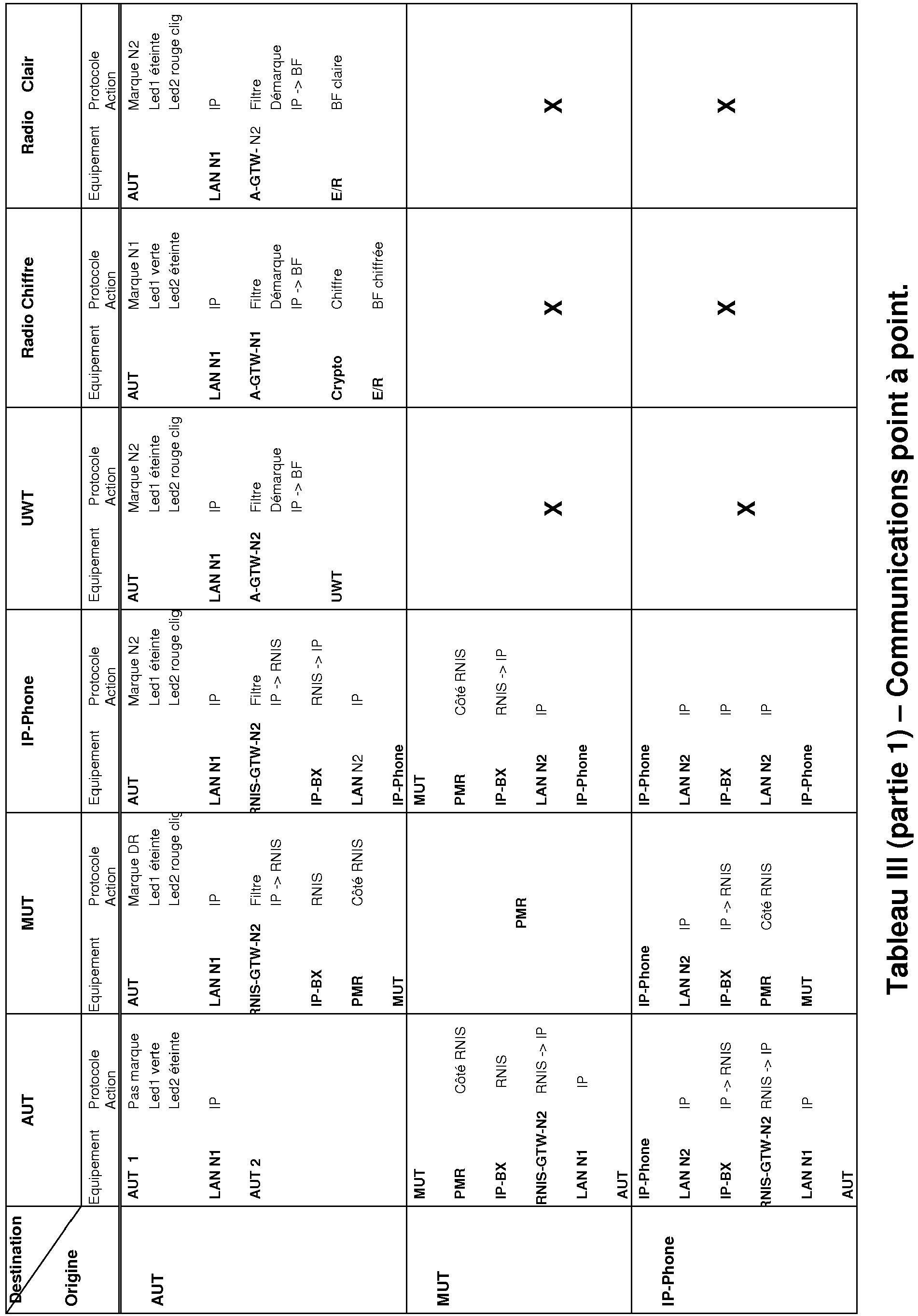

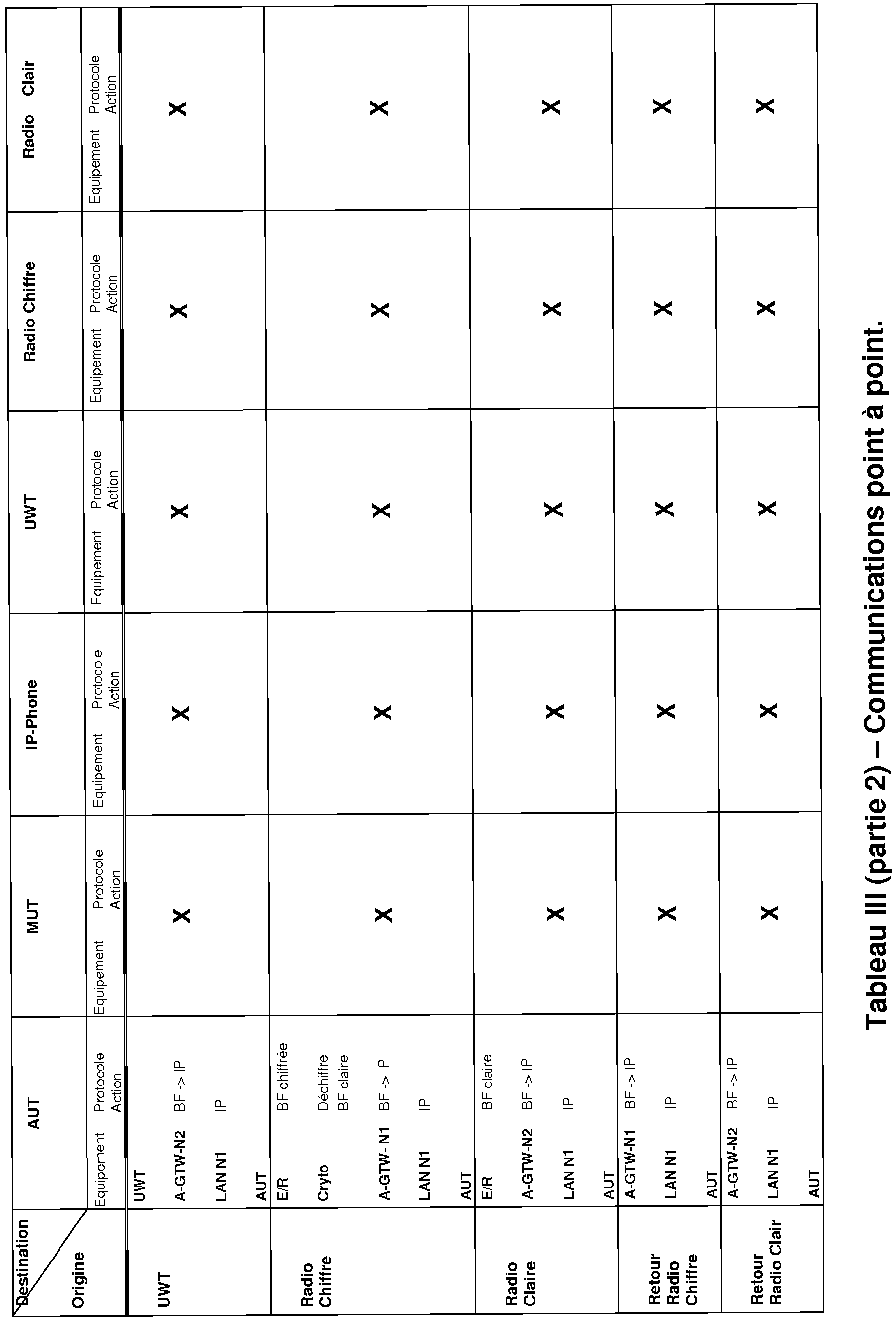

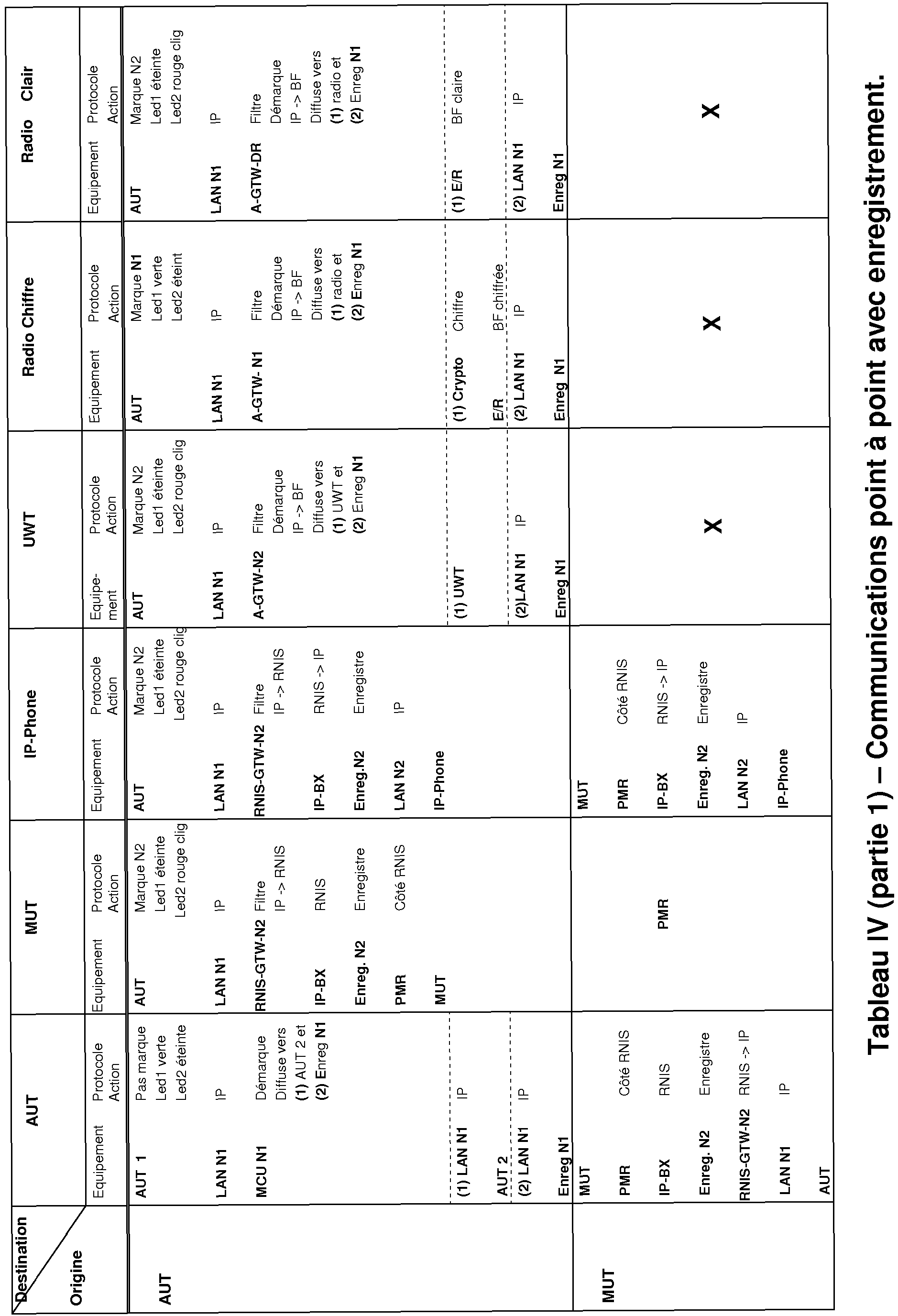

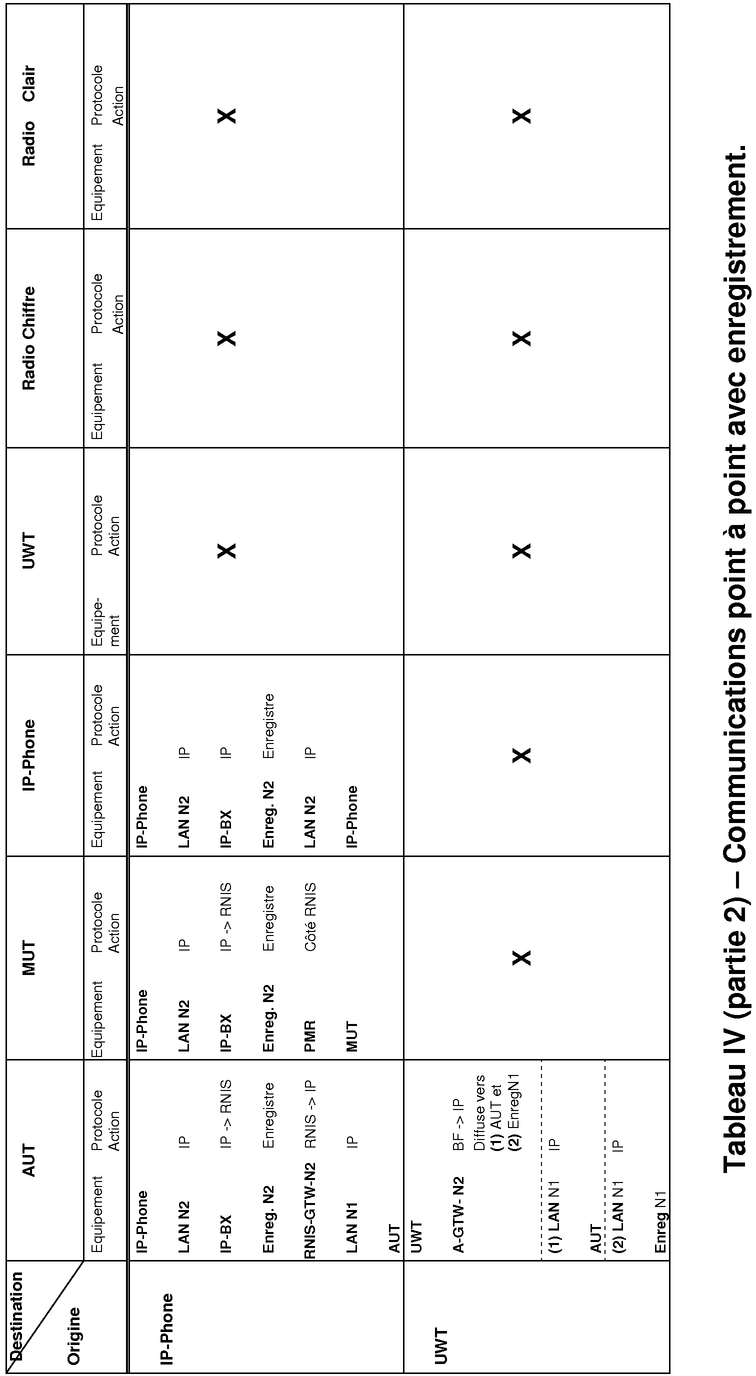

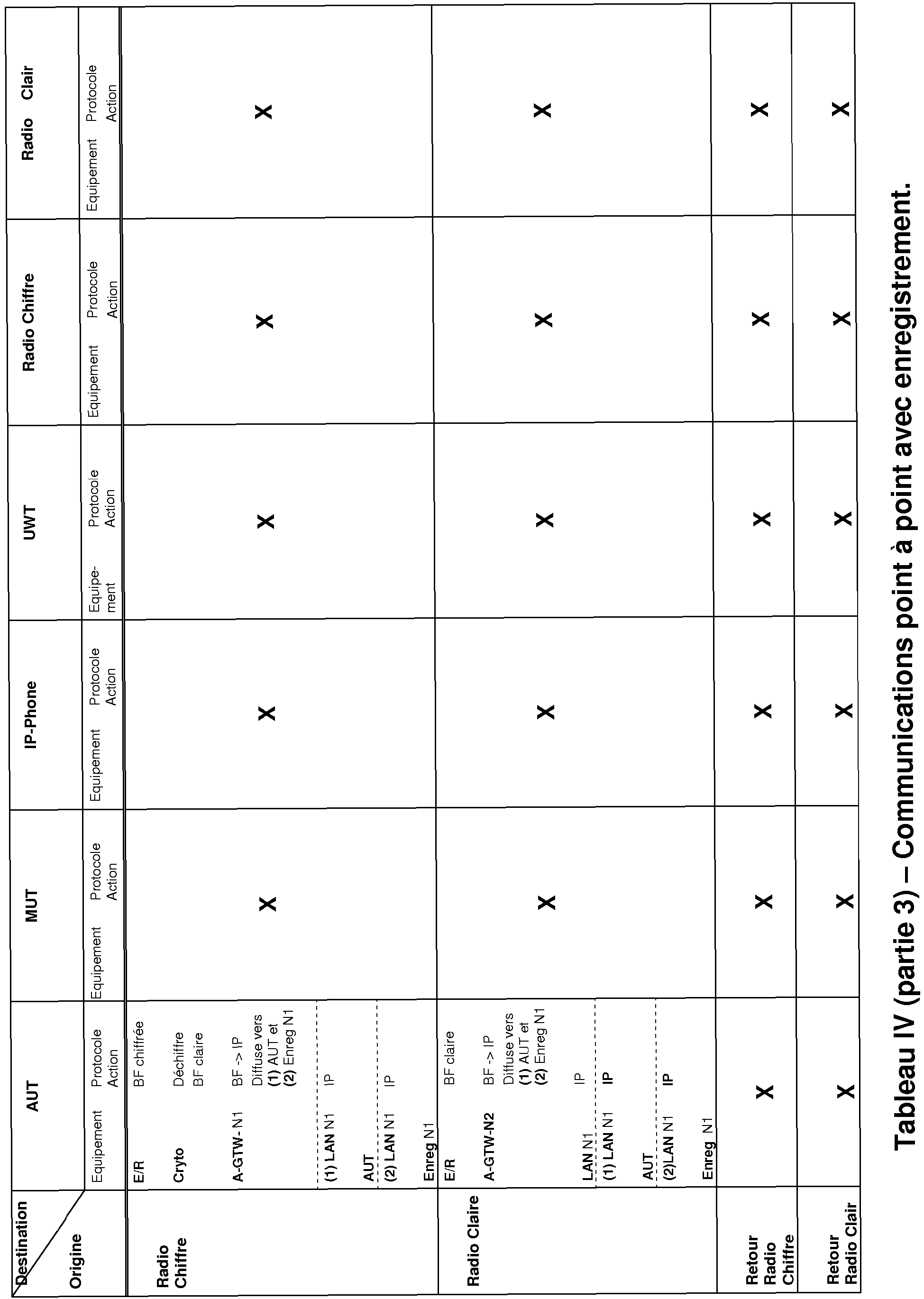

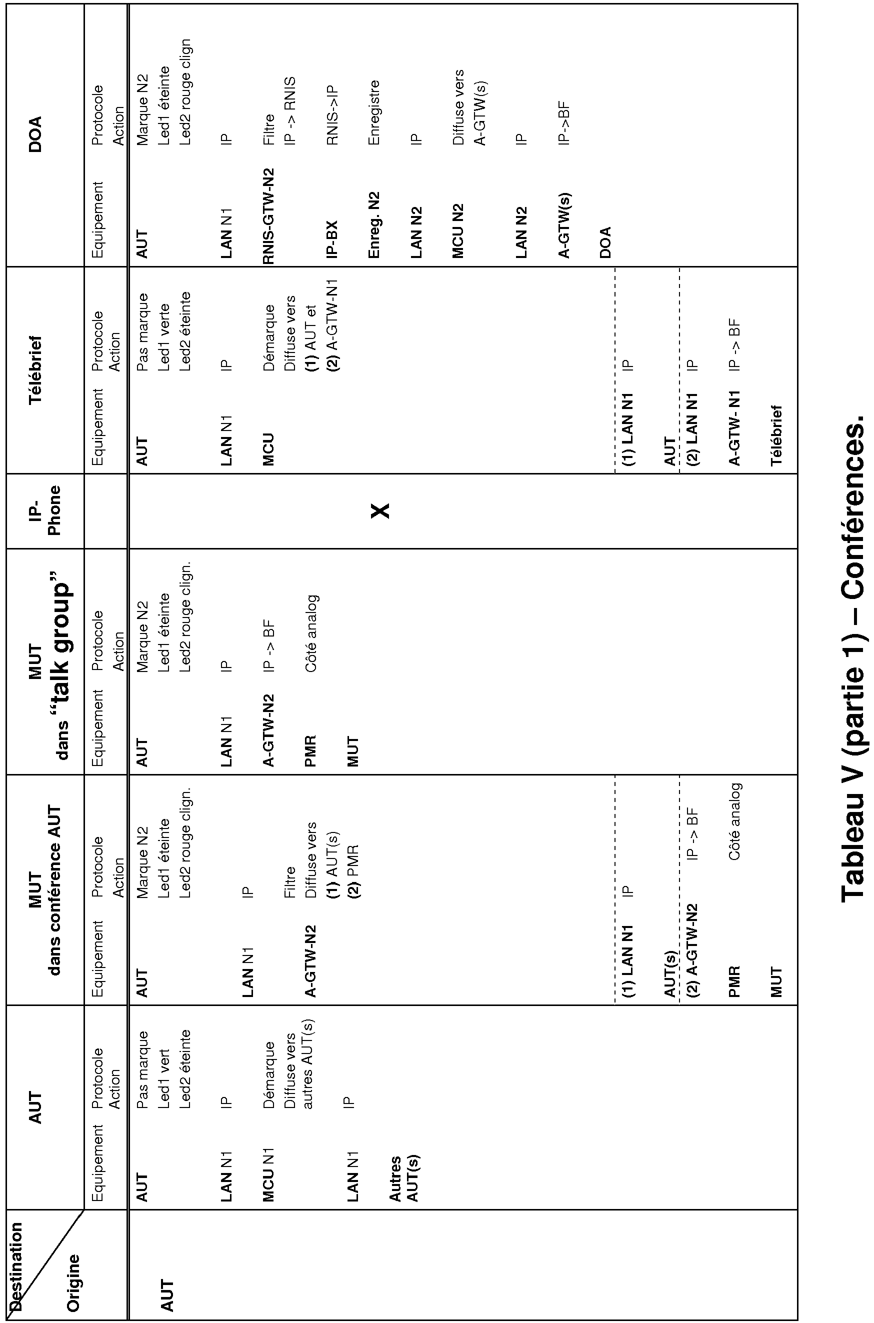

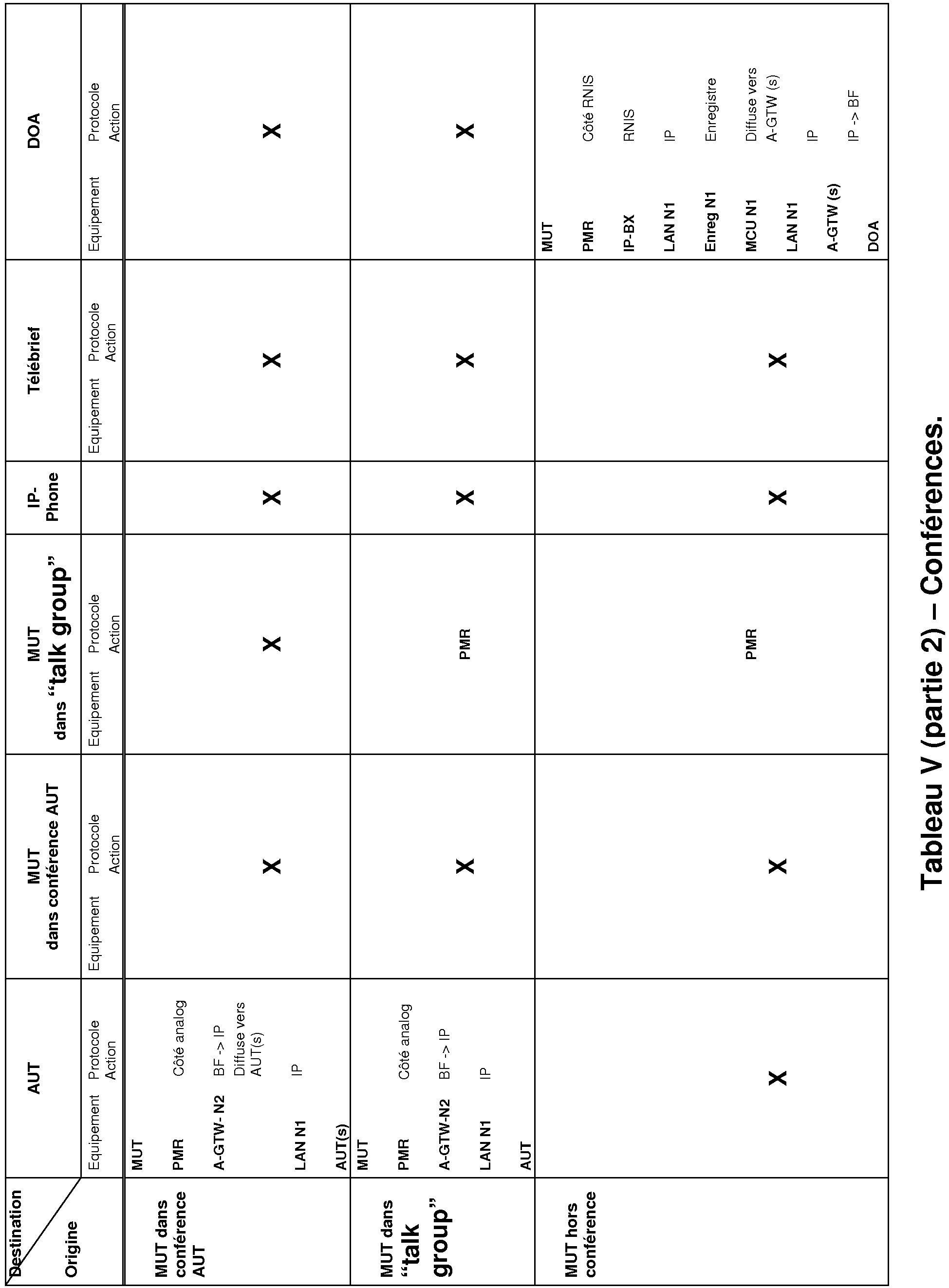

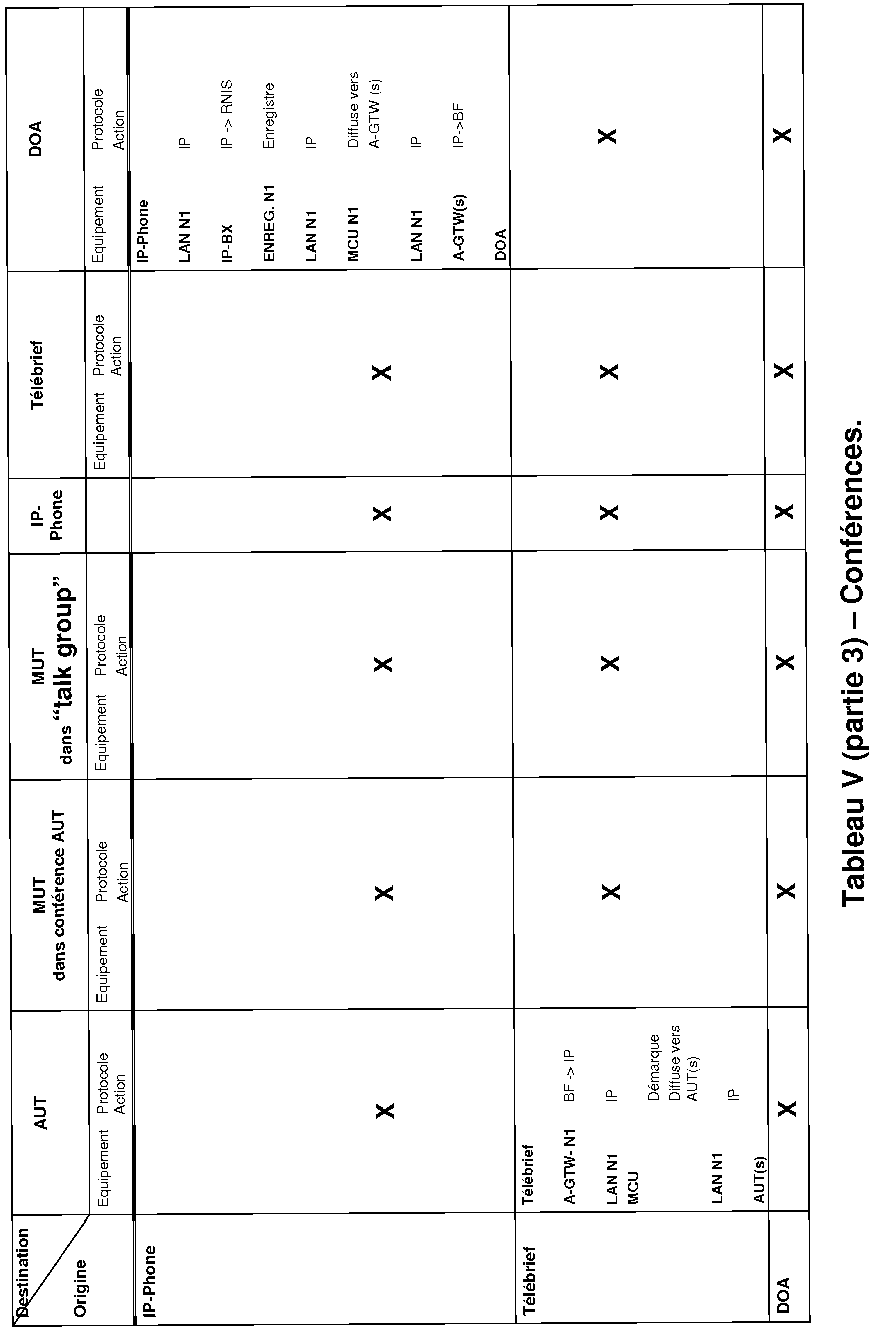

## Revendications

1. Système permettant des échanges de données, entre au moins un premier domaine ayant un premier niveau de sécurité N1 et un deuxième domaine ayant un deuxième niveau de sécurité N2, le premier niveau de sécurité N1 étant supérieur au deuxième niveau de sécurité N2, le premier domaine de sécurité comprenant un premier réseau (1) transportant des flux audio utilisant au moins les protocoles Internet IP et voix sur IP VoIP, **caractérisé en ce qu'**il comporte au moins les éléments suivants :
∘ des moyens de marquage adaptés à insérer un marquant de premier niveau de securité N1 ou de deuxième niveau de sécurité N2 dans des flux audio en fonction de leur niveau de sécurité, lesdits moyens étant positionnés dans des terminaux (26) raccordés au premier réseau (1) du premier domaine de niveau de sécurité N1,
∘ des moyens de filtrage, FISI N1 et FISI N2, adaptés à filtrer des flux audio, ledit ou lesdits moyens de filtrage FISI N1 étant positionnés dans au moins une première passerelle filtrante (17, 18, 20) et ledit ou lesdits moyens de filtrage FISI N2 étant positionnés dans au moins une autre passerelle filtrante (17, 19, 21, 24), lesdites passerelles étant raccordées au premier réseau (1) du domaine de premier niveau de sécurité N1, lesdites passerelles étant adaptées à réaliser une rupture de protocole consistant à transformer un protocole de communication des flux audio en un autre protocole de communication, à détecter la présence d'un marquant de niveau de sécurité N1 ou N2 dans le flux audio issu du premier réseau, et à contrôler le transit dudit flux audio en relation avec la cohérence entre le marquant détecté et le marquant configuré dans ladite passerelle.

2. Système selon la revendication 1, **caractérisé en ce qu'**au moins un flux audio est un canal particulier d'une session de communication multimédia.

3. Système selon l'une quelconque des revendications 1 ou 2, **caractérisé en ce qu'**au moins une des passerelles filtrantes comprend une passerelle filtrante ISDN, connectée à un autocommutateur téléphonique IP-BX (4), ladite passerelle filtrante ISDN étant adaptée à traduire en un protocole ISDN, les flux audio voix sur IP, VoIP, issus du premier réseau de premier niveau, les flux échangés entre ladite passerelle filtrante ISDN et l'autocommutateur comprenant des flux ISDN.

4. Système selon la revendication 3, **caractérisé en ce que** ledit autocommutateur IP-BX (4) ou au moins un desdits autocommutateurs IP-BX est connecté à un deuxième réseau (2) de deuxième niveau de sécurité N2.

5. Système selon l'une quelconque des revendications 3 ou 4 **caractérisé en ce qu'** au moins un desdits autocommutateurs IP-BX est connecté à une passerelle ISDN (22), elle-même en relation avec plusieurs postes radios (28) d'un sous-système radio (9), lesdits postes radios étant eux-mêmes en relation avec une passerelle analogique (27), elle-même interconnectée avec une des passerelles filtrantes du premier réseau.

6. Système selon l'une quelconque des revendications 1, 2, 3, 4 ou 5, **caractérisé en ce qu'**un équipement de type analogique (11, 27, 15) du deuxième domaine ayant le deuxième niveau de sécurité N2 est en liaison avec le premier réseau (1) de premier niveau de sécurité N1 grâce à une desdites passerelles filtrantes analogiques configurées pour réaliser une rupture de protocole IP/analogique et une procédure de filtrage de flux, la rupture de protocole consistant à transformer en signal audio BF les flux audio reçus du premier réseau N1, qui sont munis d'un marquant correspondant à un deuxième niveau de sécurité N2 et à transformer en flux audio encodé en VoIP les signaux audio BF reçus dudit équipement de type analogique ayant pour destination un équipement ou un terminal (26) raccordé au premier réseau (1).

7. Système selon l'une quelconques des revendications 1, 2, 3, 4, 5 ou 6, **caractérisé en ce qu'**un équipement de type analogique (10, 16) du premier domaine de premier niveau de sécurité N1 est en liaison avec ledit premier réseau (1) grâce à une desdites passerelles filtrantes analogiques configurées pour réaliser une rupture de protocole entre le protocole IP et le protocole analogique et pour filtrer le flux, la rupture de protocole consistant à :
o transformer en signal audio BF les flux audio reçus du premier réseau, qui sont munis d'un marquant correspondant à un premier niveau de sécurité, à destination desdits équipements audio, et
o transformer en flux audio encodé en VoIP les signaux audio BF reçus dudit équipement de type analogique ayant pour destination un équipement ou un terminal (26) raccordé au premier réseau.

8. Système selon l'une quelconques des revendications 1, 2, 3, 4, 5, 6 ou 7, **caractérisé en ce qu'**au moins un desdits moyens de marquage positionnés dans un terminal (26) est adapté à commander un affichage au moyen de Leds raccordées directement, afin de confirmer l'insertion d'un marquant dans le flux audio généré vers le premier réseau (1).

9. Système selon l'une quelconques des revendications 1, 2, 3, 4, 5, 6, 7 ou 8, **caractérisé en ce qu'**au moins un desdits moyens de marquage positionnés dans un terminal (26) est adapté à insérer ledit marquant selon une période choisie afin de garantir une répartition du marquant sous-multiple de la période d'émission du paquet audio.

10. Système selon l'une quelconques des revendications 1, 2, 3, 4, 5, 6, 7, 8 ou 9, **caractérisé en ce que** lesdits marquants de premier niveau de sécurité N1 ou de deuxième niveau de sécurité N2 diffèrent l'un de l'autre d'au moins un bit au minimum, lors de toute comparaison après rotations circulaires d'un des marquants par rapport à l'autre.

11. Système selon l'une quelconques des revendications 1, 2, 3, 4, 5, 6, 7, 8 ou 9, **caractérisé en ce que** lesdits marquants de premier niveau de sécurité N1 ou de deuxième niveau de sécurité N2 diffèrent l'un de l'autre d'au moins un bit, sur toute portion d'une longueur donnée, au minimum lors de toute comparaison après toutes rotations circulaires d'un des marquants par rapport à l'autre, ladite longueur donnée étant en relation avec un seuil de détection, soit de blocage, soit d'autorisation de transit, dudit flux audio, dans au moins une desdites passerelles de filtrage.

12. Système selon l'une quelconques des revendications 1, 2, 3, 4, 5, 6, 7, 8, 9, 10 ou 11, **caractérisé en ce qu'**au moins un desdits moyens de filtrage positionnés dans une des dites passerelles filtrantes est adapté à émettre dans la voie retour dudit flux audio une tonalité d'alerte de non-détection du marquant configuré, lorsque ledit marquant n'a pas été détecté après un délai en relation avec la détection d'un signal PTT transporté dans l'encodage VoIP dudit flux audio.

13. Système selon la revendication 12, **caractérisé en ce que** ledit signal PTT est transporté soit dans au moins un bit M encodé dans le protocole RTP dudit flux audio, soit dans la signalisation RTCP encodé dans le protocole RTP dudit flux audio, soit dans la bande audio des charges encodé dans le protocole RTP.

14. Système selon l'une quelconques précédentes, **caractérisé en ce qu'**il comprend un dispositif de filtrage adapté à accepter une perte de paquet sans perte de détection de marquage et donc de blocage du flux audio.

15. Système selon l'une quelconques précédentes, **caractérisé en ce que** l'encodage d'au moins un desdits flux audio est effectué sous le format G711 loi A ou loi mu.

## Patentansprüche

1. System, das den Austausch von Daten zwischen wenigstens einer ersten Domäne mit einer ersten Sicherheitsstufe N1 und einer zweiten Domäne mit einer zweiten Sicherheitsstufe N2 zulässt, wobei die erste Sicherheitsstufe N1 höher ist als die zweite Sicherheitsstufe N2, wobei die erste Sicherheitsdomäne ein erstes Netzwerk umfasst (1), das Audiodatenflüsse transportiert, die wenigstens die Internetprotokolle IP und VoIP nutzen, **dadurch gekennzeichnet, dass** es wenigstens die folgenden Schritte beinhaltet:
• Markierungsmittel, ausgelegt zum Einfügen einer Markierung der ersten Sicherheitsstufe N1 oder der zweiten Sicherheitsstufe N2 in die Audiodatenflüsse je nach ihrer Sicherheitsstufe, wobei die Mittel in Endgeräten (26) positioniert sind, die an das Netzwerk (1) der ersten Domäne mit Sicherheitsstufe N1 angeschlossen sind,
• Filtermittel FISI N1 und FISI N2, ausgelegt zum Filtern der Audiodatenflüsse, wobei das oder die Filtermittel FISI N1 in wenigstens einem ersten Filter-Gateway (17, 18, 20) positioniert ist/sind und das oder die Filtermittel FISI N2 in wenigstens einem anderen Filter-Gateway (17, 19, 21, 24) positioniert ist/sind, wobei die Gateways an wenigstens ein Netzwerk (1) der Domäne der ersten Sicherheitsstufe N1 angeschlossen sind, wobei die Gateways zum Realisieren einer Protokollunterbrechung ausgelegt sind, bestehend im Umwandeln eines Audiodatenfluss-Kommunikationsprotokolls in ein anderes Kommunikationsprotokoll, zum Erkennen der Anwesenheit einer Markierung der Sicherheitsstufe N1 oder N2 in dem Audiodatenfluss vom ersten Netzwerk, und zum Steuern der Übertragung des Audiodatenflusses in Relation mit der Kohärenz zwischen der erkannten Markierung und der in dem Gateway konfigurierten Markierung.

2. System nach Anspruch 1, **dadurch gekennzeichnet, dass** wenigstens ein Audiodatenfluss ein bestimmter Kanal einer Multimedia-Kommunikationssitzung ist.

3. System nach Anspruch 1 oder 2, **dadurch gekennzeichnet, dass** wenigstens eines der Filter-Gateways ein ISDN-Filter-Gateway umfasst, das mit einer Telefonieselbstwähleinrichtung IP-BX (4) verbunden ist, wobei das ISDN-Filter-Gateway zum Umsetzen der VoIP-Audiodatenflüsse in ein ISDN-Protokoll ausgelegt ist, ausgegeben vom ersten Netzwerk der ersten Stufe, wobei die zwischen dem ISDN-Filter-Gateway und der Selbstwähleinrichtung ausgetauschten Datenflüsse ISDN-Datenflüsse umfassen.

4. System nach Anspruch 3, **dadurch gekennzeichnet, dass** die Selbstwähleinrichtung IP-BX (4) oder wenigstens eine der Selbstwähleinrichtungen IP-BX mit einem zweiten Netzwerk (2) der zweiten Sicherheitsstufe N2 verbunden ist.

5. System nach Anspruch 3 oder 4, **dadurch gekennzeichnet, dass** wenigstens eine der Selbstwähleinrichtungen IP-BX mit einem ISDN-Gateway (22) verbunden ist, das wiederum mit mehreren Funkstationen (28) eines Funksubsystems (9) in Relation ist, wobei die Funkstationen wiederum mit einem analogen Gateway (27) in Relation ist, das wiederum mit einem der Filter-Gateways des ersten Netzwerks verbunden ist.

6. System nach Anspruch 1, 2, 3, 4 oder 5, **dadurch gekennzeichnet, dass** ein Gerät des analogen Typs (11, 27, 15) der zweiten Domäne mit der zweiten Sicherheitsstufe N2 mit dem ersten Netzwerk (1) der Sicherheitsstufe N1 dank eines der analogen Filter-Gateways in Verbindung ist, konfiguriert zum Realisieren einer IP/Analog-Protokollunterbrechung und eines Datenflussfilterverfahrens, wobei die Protokollunterbrechung darin besteht, die vom ersten Netzwerk N1 empfangenen, mit einer Markierung entsprechend einer zweiten Sicherheitsstufe N2 versehenen Audioflüsse in ein Audiosignal BF umzuwandeln, und darin, die vom Gerät des analogen Typs empfangenen, für an das erste Netzwerk (1) angeschlossenes Gerät oder Endgerät (26) bestimmten Audiosignale BF in einen in VoIP codierten Audiodatenfluss umzuwandeln.

7. System nach Anspruch 1, 2, 3, 4, 5 oder 6, **dadurch gekennzeichnet, dass** ein Gerät des analogen Typs (10, 16) der ersten Domäne der ersten Sicherheitsstufe (N1) mit dem ersten Netzwerk (1) dank eines der analogen Filter-Gateways in Verbindung ist, konfiguriert zum Realisieren einer Protokollunterbrechung zwischen dem IP-Protokoll und dem Analogprotokoll und zum Filtern der Flüsse, wobei die Protokollunterbrechung besteht aus:
∘ Umwandeln der vom ersten Netzwerk empfangenen, für die Audiogeräte bestimmten Audioflüsse, die mit einer Markierung entsprechend einer ersten Sicherheitsstufe versehen sind, in ein Audiosignal BF, und
∘ Umwandeln der von dem Gerät des analogen Typs empfangenen, für das erste Netzwerk angeschlossene Gerät oder Endgerät (26) bestimmten Audiosignale BF in einen in VoIP codierten Audiodatenfluss.

8. System nach Anspruch 1, 2, 3, 4, 5, 6 oder 7, **dadurch gekennzeichnet, dass** wenigstens eines der in einem Endgerät (26) positionierten Markierungsmittel zum Steuern einer Anzeige mittels direkt angeschlossener LEDs ausgelegt sind, um das Einfügen einer Markierung in den erzeugten Audiofluss zum ersten Netzwerk (1) zu bestätigen.

9. System nach Anspruch 1, 2, 3, 4, 5, 6, 7 oder 8, **dadurch gekennzeichnet, dass** wenigstens eines der in einem Endgerät (26) positionierten Markierungsmittel zum Einfügen der Markierung ausgelegt ist, gemäß einer Periode, gewählt zum Garantieren einer Verteilung des Markierungsbruchteils der Sendeperiode des Audiopakets.

10. System nach Anspruch 1, 2, 3, 4, 5, 6, 7, 8 oder 9, **dadurch gekennzeichnet, dass** die Markierungen der ersten Sicherheitsstufe N1 oder der zweiten Sicherheitsstufe N2 sich voneinander um mindestens ein Bit während des gesamten Vergleichs nach Umläufen von einer der Markierungen in Bezug auf die andere unterscheiden.

11. System nach Anspruch 1, 2, 3, 4, 5, 6, 7, 8 oder 9, **dadurch gekennzeichnet, dass** sich die Markierungen der ersten Sicherheitsstufe N1 oder der zweiten Sicherheitsstufe N2 voneinander um mindestens ein Bit über den gesamten Teil einer gegebenen Länge unterscheiden, wenigstens während des gesamten Vergleichs nach allen Umläufen einer der Markierungen in Bezug auf die andere, wobei die gegebene Länge in Relation mit einer Erkennungsschwelle entweder der Übertragungssperrung oder -autorisierung des Audiodatenflusses in wenigstens einem der Filter-Gateways ist.

12. System nach Anspruch 1, 2, 3, 4, 5, 6, 7, 8, 9, 10 oder 11, **dadurch gekennzeichnet, dass** wenigstens eines der in einem der Filter-Gateways positionierten Filtermittel zum Senden einer Alarmierungstonalität der Nichterkennung der konfigurierten Markierung auf dem Rückkanal des Audiodatenflusses ausgelegt ist, wenn die Markierung nach einer Verzögerung in Bezug auf die Erkennung eines in der VoIP-Codierung des Audioflusses transportierten PTT-Signals nicht erkannt wurde.

13. System nach Anspruch 12, **dadurch gekennzeichnet, dass** das PTT-Signal entweder in mindestens einem im RTP-Protokoll des Audiodatenflusses codierten Bit M oder in der im RTP-Protokoll des Audiodatenflusses codierten RTCP-Signalisierung oder in dem im RTP-Protokoll codierten Audioband von Ladungen transportiert wird.

14. System nach einem der vorherigen Ansprüche, **dadurch gekennzeichnet, dass** es eine Filtervorrichtung zum Akzeptieren eines Paketverlusts ohne Markierungserkennungsverlust und somit Sperrung des Audiodatenflusses umfasst.

15. System nach einem der vorherigen Ansprüche, **dadurch gekennzeichnet, dass** die Codierung von wenigstens einem der Audiodatenflüsse im Format G711 A-Gesetz oder µ-Gesetz erfolgt.

## Claims

1. A system allowing exchanges of data, between at least one first domain having a first security level N1 and one second domain having a second security level N2, the first security level N1 being higher than the second security level N2, the first security domain comprising a first network (1) transporting audio streams using at least the IP and voice over IP, VoIP, internet protocols, **characterised in that** it comprises at least the following elements:
• marking means adapted for inserting a marker of the first security level N1 or marker of the second security level N2 into audio streams as a function of their security level, said means being positioned in terminals (26) connected to the first network (1) of the first domain of security level N1,
• filter means, FISI N1 and FISI N2, adapted for filtering audio streams, said one or more filter means FISI N1 being positioned in at least one first filtering gateway (17, 18, 20), and said one or more filter means FISI N2 being positioned in at least one another filtering gateway (17, 19, 21, 24), said gateways being connected to the first network (1) of the domain of the first security level N1, said gateways being adapted for effecting a protocol break consisting in transforming a communication protocol of audio streams into another communication protocol, detecting the presence of a marker of security level N1 or N2 in the audio stream arising from the first network, and monitoring the passage of said audio stream in relation to the consistency between the marker detected and the marker configured in said gateway.

2. The system according to claim 1, **characterised in that** at least one audio stream is a particular channel of a multimedia communication session.

3. The system according to any one of claims 1 or 2, **characterised in that** at least one of the filtering gateways comprises an ISDN filtering gateway, connected to an IP-BX telephone switching equipment (4), said ISDN filtering gateway being adapted for translating the voice over IP, VoIP, audio streams arising from the first network of the first level into an ISDN protocol, the streams exchanged between said ISDN filtering gateway and the switching equipment comprising ISDN streams.

4. The system according to claim 3, **characterised in that** said IP-BX switching equipment (4) or at least one of said IP-BX switching equipments is connected to a second network (2) of the second security level N2.

5. The system according to any one of claims 3 or 4, **characterised in that** at least one of said IP-BX switching equipments is connected to an ISDN gateway (22), itself being linked up with a plurality of radio sets (28) of a radio sub-system (9), said radio sets themselves being linked up with an analogue gateway (27), itself being interconnected with one of the filtering gateways of the first network.

6. The system according to any one of claims 1, 2, 3, 4 or 5, **characterised in that** a facility of analogue type (11, 27, 15) of the second domain having the second security level N2 is linked with the first network (1) of the first security level N1 by virtue of one of said analogue filtering gateways configured to perform an IP/analogue protocol break and a stream filtering procedure, the protocol break consisting in transforming into an BF audio signal the audio streams received from the first network N1, which are furnished with a marker corresponding to a second security level N2 and in transforming into a VoIP-encoded audio stream the BF audio signals received from said facility of analogue type having as destination a facility or a terminal (26) connected to the first network (1).

7. The system according to any one of claims 1, 2, 3, 4, 5 or 6, **characterised in that** a facility of analogue type (10, 16) of the first domain of the first security level N1 is linked with said first network (1) by virtue of one of said analogue filtering gateways configured to perform a protocol break between the IP protocol and the analogue protocol and to filter the stream, the protocol break consisting in:
• transforming into an BF audio signal the audio streams received from the first network, which are furnished with a marker corresponding to a first security level, destined for said audio facilities, and
• transforming into a VoIP-encoded audio stream the BF audio signals received from said facility of analogue type having as destination a facility or a terminal (26) connected to the first network.

8. The system according to any one of claims 1, 2, 3, 4, 5, 6 or 7, **characterised in that** at least one of said marking means positioned in a terminal (26) is adapted for controlling a display by means of LEDs directly connected, so as to confirm the insertion of a marker into the audio stream generated to the first network (1).

9. The system according to any one of claims 1, 2, 3, 4, 5, 6, 7 or 8, **characterised in that** at least one of said marking means positioned in a terminal (26) is adapted for inserting said marker according to a chosen period so as to guarantee a distribution of the marker which is a sub-multiple of the send period of the audio packet.

10. The system according to any one of claims 1, 2, 3, 4, 5, 6, 7, 8 or 9, **characterised in that** said markers of the first security level N1 or the second security level N2 differ from one another by at least one bit at the minimum, upon any comparison after circular rotations of one of the markers with respect to the other.

11. The system according to any one of claims 1, 2, 3, 4, 5, 6, 7, 8 or 9, **characterised in that** said markers of the first security level N1 or the second security level N2 differ from one another by at least one bit, over any portion of a given length, at the minimum upon any comparison after all circular rotations of one of the markers with respect to the other, said given length being linked with a detection threshold, either of blockage, or of passage authorisation, of said audio stream, in at least one of said filtering gateways.

12. The system according to any one of claims 1, 2, 3, 4, 5, 6, 7, 8, 9, 10 or 11, **characterised in that** at least one of said filter means positioned in one of said filtering gateways is adapted for sending in the return pathway of said audio stream a tone for alerting non-detection of the configured marker, when said marker has not been detected after a deadline linked with the detection of a signal PTT transported in the VoIP encoding of said audio stream.

13. The system according to claim 12, **characterised in that** said signal PTT is transported either in at least one bit M encoded in the RTP protocol of said audio stream, or in the RTCP signalling encoded in the RTP protocol of said audio stream, or in the audio band of the loads encoded in the RTP protocol.

14. The system according to any one of the preceding claims, **characterised in that** it comprises a filtering device adapted for accepting a loss of packet without loss of detection of marking and therefore of blockage of the audio stream.

15. The system according to any one of the preceding claims, **characterised in that** the encoding of at least one of said audio streams is performed under the G711 A-law or mu-law format.
